# EUROPEAN PATENT APPLICATION

(11) **EP 4 686 230 A1**
(43) Date of publication of application: **28.01.2026**
(21) Application number: 24784013.5
(22) Date of filing: 07.03.2024
(51) Int. Cl.: H04W 4/029

(54) **COMMUNICATION METHOD AND COMMUNICATION APPARATUS**

(30) Priority: 06.04.2023 CN 202310384600
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Goddar, Heinz J.
(86) International application number: PCT/CN2024/080558
(87) International publication number: WO 2024/207928

(57) **Abstract**

This application provides a communication method and a communication apparatus, and relates to the field of wireless communication technologies. The method includes: A to-be-located terminal obtains an identifier of a core network device. The to-be-located terminal sends first information to a plurality of assistant terminals, where the first information indicates the assistant terminals to send measurement data to the core network device, the measurement data includes sidelink positioning measurement data between the assistant terminals and the to-be-located terminal, and the measurement data sent by the plurality of assistant terminals is used by the core network device to calculate a location of the to-be-located terminal. According to the communication method provided in embodiments of this application, the plurality of assistant terminals can participate in positioning of a same to-be-located terminal, to improve positioning accuracy of the to-be-located terminal.

## Description

This application claims priority to Chinese Patent Application No. 202310384600.1, filed with the China National Intellectual Property Administration on April 6, 2023 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

With continuous development of mobile communication technologies, requirements for location services are also increasing. Application scenarios of the location service are becoming more diversified. For example, a large quantity of application scenarios, such as internet of vehicles, autonomous driving, smart manufacturing, smart logistics, and uncrewed aerial vehicles, have high requirements on positioning accuracy. In some cases, when a user equipment (user equipment, UE) falls beyond coverage of a network or cannot obtain sufficient cell signals, the network may locate the UE by using a combination of sidelink (sidelink, SL) positioning and Uu positioning. In this manner, an off-network UE (denoted as a target UE) may be located through a nearby on-network UE (denoted as an assistant UE).

Specifically, sidelink positioning measurement data may be first obtained through the SL positioning between the target UE and the assistant UE, and the assistant UE reports the sidelink measurement data to the network side. Then, the network side locates the assistant UE to obtain an absolute location (that is, the Uu positioning) of the assistant UE. Finally, the network side determines an absolute location of the target UE based on the absolute location of the assistant UE and the sidelink positioning measurement data reported by the assistant UE, and sends the location information to the target UE through the assistant UE. In this way, an entire positioning process is completed.

In a conventional technology, positioning accuracy is limited, and consequently it is difficult to meet a requirement for high positioning accuracy in some scenarios. How to improve positioning accuracy becomes a problem to be resolved.

### SUMMARY

Embodiments of this application provide a communication method and a communication apparatus, so that a plurality of assistant terminals can participate in positioning of a same to-be-located terminal, to improve positioning accuracy of the to-be-located terminal.

According to a first aspect, a communication method is provided, including: A to-be-located terminal obtains an identifier of a core network device. The to-be-located terminal sends first information to a plurality of assistant terminals, where the first information indicates the assistant terminals to send measurement data to the core network device, the measurement data includes sidelink positioning measurement data between the assistant terminals and the to-be-located terminal, and the measurement data sent by the plurality of assistant terminals is used by the core network device to calculate a location of the to-be-located terminal.

According to the communication method provided in embodiments of this application, the to-be-located terminal (which may also be referred to as a target terminal) first obtains the identifier of the core network device. The core network device may be any network element, for example, an LMF, pre-assigned to calculate the location of the to-be-located terminal. After obtaining the identifier, the to-be-located terminal may learn or determine, based on the identifier, which specific core network device calculates the location of the to-be-located terminal. Then, the to-be-located terminal may send the first information to each of the plurality of assistant terminals in any manner, for example, unicast/multicast/broadcast, where the first information indicates the assistant terminal to send the measurement data to the core network device, or the first information indicates that the core network device calculates the location of the to-be-located terminal, or the first information indicates that the core network device manages positioning of the to-be-located terminal. Because the first information sent to the plurality of assistant terminals indicates the core network device, after receiving the first information, the plurality of assistant terminals send respective measurement data to the same core network device based on the first information, so that the core network device can calculate the location of the to-be-located terminal based on a plurality of pieces of measurement data sent by the plurality of assistant terminals. According to the communication method provided in embodiments of this application, the plurality of assistant terminals can participate in positioning of a same to-be-located terminal, to improve positioning accuracy of the to-be-located terminal.

Optionally, the identifier of the core network device is any information that can uniquely identify an identity of the core network device, and a terminal device can explicitly learn, based on the identifier, which specific core network device performs location calculation. For example, the identifier of the core network device may be an internet protocol (internet protocol, IP) address, a fully qualified domain name (fully qualified domain name, FQDN), or the like, but is not limited thereto.

Optionally, the measurement data herein may include distance measurement information between the to-be-located terminal and the assistant terminal, for example, may include a measurement duration T_{round}, a calculation duration T_{reply}, time of flight TOF or Tₚᵣₒₚ, and the like.

Optionally, the measurement data herein may include relative distance information between the to-be-located terminal and the assistant terminal, and the assistant terminal or the to-be-located terminal obtains the relative distance information based on the distance measurement information. For example, the relative distance information is obtained through calculation based on the foregoing time of flight TOF.

Optionally, the measurement data herein may include angle information such as an angle of arrival AoA and an angle of departure AoD between the to-be-located terminal and the assistant terminal, for example, may include information such as a phase difference or a time difference between signals arriving at different antenna units, or a phase difference or a time difference between signals departing from different antenna units.

In a possible implementation, the method further includes: The to-be-located terminal obtains second information, where the second information identifies positioning of the to-be-located terminal. The to-be-located terminal sends the second information to the plurality of assistant terminals.

After obtaining the second information, the to-be-located terminal further sends the second information to the assistant terminal, and the assistant terminal forwards the second information to the core network device. Because the core network device may receive measurement data for a plurality of different to-be-located terminals from a same assistant terminal, the core network device can learn, based on the second information, which received measurement data is for a same to-be-located terminal. In this case, the plurality of pieces of measurement data can be associated, and the core network device can calculate the location of the to-be-located terminal based on the plurality of pieces of measurement data for the same to-be-located terminal. This avoids using sidelink positioning measurement data between the assistant terminal and a to-be-located terminal A to calculate a location of a to-be-located terminal B, to ensure accuracy of a positioning result.

Optionally, the first information and the second information may be same information. In this case, the first information further identifies the positioning of the to-be-located terminal, or the second information further indicates the assistant terminal to send the measurement data to the core network device.

Further, the first information may include the identifier of the core network device, and the second information includes an identifier of a location session. In this case, the identifier of the core network device (for example, an LMF ID) and the identifier of the location session (for example, a location session ID) may be unified as one identifier, for example, a routing identifier (routing identifier) or a deferred routing identifier (deferred routing identifier). In this case, the identifier may identify both the core network device and the positioning of the to-be-located terminal.

Optionally, the core network device may be an LMF, and the LMF has a plurality of different IP addresses. In this case, the different IP addresses may identify positioning of different to-be-located terminals. Therefore, the unified identifier may be an IP address of the LMF, and the IP address may not only identify the core network device but also identify the positioning of the to-be-located terminal. The IP address is a routing identifier, and a plurality of different assistant terminals may send a plurality of pieces of measurement data for the to-be-located terminal to the IP address. The core network device learns that the plurality of pieces of measurement data received by the IP address are all for the to-be-located terminal, to be specific, measurement data for a same to-be-located terminal. In this case, the plurality of pieces of measurement data may be associated.

In a possible implementation, the second information includes the identifier of the location session.

In a possible implementation, the first information further identifies the positioning of the to-be-located terminal.

In a possible implementation, the first information includes the identifier of the core network device.

In a possible implementation, that a to-be-located terminal obtains an identifier of a core network device includes: The to-be-located terminal receives the identifier of the core network device sent by a policy control function PCF network element. Alternatively, the to-be-located terminal receives, through one of the assistant terminals, the identifier of the core network device sent by a first access and mobility management function AMF network element serving the assistant terminal. Alternatively, the to-be-located terminal receives the identifier of the core network device sent by a second AMF network element serving the to-be-located terminal.

In a possible implementation, that the to-be-located terminal obtains second information includes: The to-be-located terminal generates the second information. Alternatively, the to-be-located terminal receives the second information sent by one of the plurality of assistant terminals. Alternatively, the to-be-located terminal receives, through a second AMF network element serving the to-be-located terminal, the second information sent by the core network device.

According to a second aspect, a communication method is provided, including: A core network device receives measurement data and second information that are sent by each of N assistant terminals, where the measurement data includes sidelink positioning measurement data between the assistant terminal and a to-be-located terminal, the second information identifies positioning of the to-be-located terminal, and N is an integer greater than or equal to 2. The core network device calculates a location of the to-be-located terminal based on N pieces of measurement data corresponding to the N assistant terminals.

In a possible implementation, that the core network device calculates a location of the to-be-located terminal based on N pieces of measurement data corresponding to the N assistant terminals includes: When determining that N is greater than or equal to a preset threshold, the core network device calculates the location of the to-be-located terminal based on the N pieces of measurement data.

Through the foregoing setting, it can be ensured that a specific amount of measurement data is always used to calculate the location of the to-be-located terminal, and positioning accuracy of the to-be-located terminal can be ensured.

Optionally, the preset threshold may be pre-specified in a system or a protocol. For example, the protocol specifies that the preset threshold may be 2, 3, 4, or more. In this case, the to-be-located terminal needs to send first information and the second information to a larger quantity, relative to the preset threshold, of assistant terminals. For example, the protocol specifies that the preset threshold may be 3, and therefore the to-be-located terminal needs to send the first information and the second information to three or more assistant terminals.

Optionally, the preset threshold may be indicated by a terminal side. The to-be-located terminal may indicate, to the core network device according to a positioning accuracy requirement (a higher positioning accuracy requirement indicates a need for a larger quantity of assistant terminals) through one of the assistant terminals, that the preset threshold may be, for example, 2, 3, 4, or more.

Optionally, the to-be-located terminal may send a quantity of assistant terminals to the core network device through one of the assistant terminals or the to-be-located terminal, so that the core network device sets the preset threshold to the quantity of assistant terminals. Alternatively, the to-be-located terminal may send an identifier of each assistant terminal to the core network device through one of the assistant terminals or the to-be-located terminal, so that the core network device learns of a quantity of assistant terminals. When determining that a value of N reaches the preset threshold, that is, the measurement data sent by all the assistant terminals is received, the core network device calculates the location of the to-be-located terminal based on the N pieces of measurement data. For example, the quantity of assistant terminals may be 4, and after determining that four pieces of measurement data (that is, the value of N reaches 4) are received, the core network device calculates the location of the to-be-located terminal based on the received four pieces of measurement data.

Optionally, the to-be-located terminal may indicate the quantity of assistant terminals to the core network device through one of the assistant terminals, and the core network device considers by default that the preset threshold is a quantity of assistant terminals of a specific proportion. Alternatively, the terminal side may directly indicate the quantity of assistant terminals of the specific proportion. In this case, as long as measurement data sent by the assistant terminals of the specific proportion is received, the location of the to-be-located terminal may start to be calculated. For example, the quantity of assistant terminals may be 4, and the preset proportion may be 50% (that is, the preset threshold is 2 in this case). The terminal side may indicate that the quantity of assistant terminals is 4, and the core network device determines that the preset threshold is 4*50%=2 according to a protocol specification, or the terminal side may directly indicate that the preset threshold is 2. After determining that two pieces of measurement data (that is, the value of N reaches 2) are received, the core network device may calculate the location of the to-be-located terminal based on the received two pieces of measurement data, without waiting for all the four pieces of measurement data to be received.

In a possible implementation, that the core network device calculates, a location of the to-be-located terminal based on N pieces of measurement data corresponding to the N assistant terminals includes: When determining that duration since a 1^{st} piece of measurement data in the N pieces of measurement data is received reaches preset duration, the core network device calculates the location of the to-be-located terminal based on the N pieces of measurement data, where measurement data in the N pieces of measurement data other than the 1^{st} piece of measurement data is received within the preset duration.

Through the foregoing setting, it can be ensured that the core network device calculates the location of the to-be-located terminal in time, in other words, it can be ensured that the to-be-located terminal can receive location information in time, which can ensure timeliness, avoid a long wait, and therefore improve use experience of the terminal.

Optionally, when determining that the 1^{st} piece of measurement data associated with the second information is received, the core network device starts a timer. After the timer expires (after the timer expires), the core network device calculates the location of the to-be-located terminal based on the received one or more pieces of measurement data associated with the second information.

Optionally, the preset duration may be pre-specified in a system or a protocol. For example, the preset duration may be 1 second (s), 2s, 5s, 10s, 30s, 60s, 90s, 120s, or the like.

In a possible implementation, before the core network device receives the measurement data and the second information that are sent by each of the N assistant terminals, the method further includes: The core network device sends the second information to at least one of the assistant terminals or the to-be-located terminal. Alternatively, the core network device receives the second information sent by the assistant terminal or the to-be-located terminal.

In a possible implementation, before the core network device receives the measurement data and the second information that are sent by each of the N assistant terminals, the method further includes: The core network device sends first information to at least one of the assistant terminals or the to-be-located terminal, where the first information indicates the assistant terminal to send the measurement data to the core network device.

According to a third aspect, a communication method is provided, including: An assistant terminal receives first information, where the first information indicates the assistant terminal to send measurement data to a core network device, and the measurement data includes sidelink positioning measurement data between the assistant terminal and a to-be-located terminal. The assistant terminal sends the measurement data to the core network device based on the first information, where the measurement data sent by a plurality of assistant terminals is used by the core network device to calculate a location of the to-be-located terminal.

In a possible implementation, the method further includes: The assistant terminal obtains second information, where the second information identifies positioning of the to-be-located terminal. The assistant terminal sends the second information to the core network device.

In a possible implementation, the second information includes an identifier of a location session or an identifier of the to-be-located terminal.

In a possible implementation, the first information further identifies the positioning of the to-be-located terminal.

In a possible implementation, the first information includes an identifier of the core network device.

In a possible implementation, that an assistant terminal receives first information includes: The assistant terminal receives the first information sent by the to-be-located terminal. Alternatively, the assistant terminal receives the first information sent by a first access and mobility management function AMF network element serving the assistant terminal.

In a possible implementation, that the assistant terminal obtains second information includes: The assistant terminal generates the second information. Alternatively, the assistant terminal receives, through a first AMF network element serving the assistant terminal, the second information sent by the core network device. Alternatively, the assistant terminal receives, the second information sent by the to-be-located terminal.

In a possible implementation, that the assistant terminal sends the measurement data to the core network device based on the first information includes: The assistant terminal sends the first information and the measurement data to a first AMF network element serving the assistant terminal, where the first information is used by the first AMF network element to send the measurement data to the core network device.

According to a fourth aspect, a terminal device is provided, including: an obtaining unit, configured to obtain an identifier of a core network device; and a sending unit, configured to send first information to a plurality of assistant terminals, where the first information indicates the assistant terminals to send measurement data to the core network device, the measurement data includes sidelink positioning measurement data between the assistant terminals and the terminal device, and the measurement data sent by the plurality of assistant terminals is used by the core network device to calculate a location of the terminal device.

In a possible implementation, the obtaining unit is further configured to obtain second information, where the second information identifies positioning of the terminal device; and the sending unit is further configured to send the second information to the plurality of assistant terminals.

In a possible implementation, the second information includes an identifier of a location session.

In a possible implementation, the first information further identifies the positioning of the terminal device.

In a possible implementation, the first information includes the identifier of the core network device.

In a possible implementation, the obtaining unit is specifically configured to: receive the identifier of the core network device sent by a policy control function PCF network element; receive, through one of the assistant terminals, the identifier of the core network device sent by a first access and mobility management function AMF network element serving the assistant terminal; or receive the identifier of the core network device sent by a second AMF network element serving the terminal device.

In a possible implementation, the obtaining unit is specifically configured to: generate the second information; receive the second information sent by one of the plurality of assistant terminals; or receive, through a second AMF network element serving the terminal device, the second information sent by the core network device.

According to a fifth aspect, a core network device is provided, including: a receiving unit, configured to receive measurement data and second information that are sent by each of N assistant terminals, where the measurement data includes sidelink positioning measurement data between the assistant terminal and a to-be-located terminal, the second information identifies positioning of the to-be-located terminal, and N is an integer greater than or equal to 2; and a processing unit, configured to calculate a location of the to-be-located terminal based on N pieces of measurement data corresponding to the N assistant terminals.

In a possible implementation, the processing unit is specifically configured to: when determining that N is greater than or equal to a preset threshold, calculate the location of the to-be-located terminal based on the N pieces of measurement data.

In a possible implementation, the processing unit is specifically configured to: when determining that duration since a 1^{st} piece of measurement data in the N pieces of measurement data is received reaches preset duration, calculate the location of the to-be-located terminal based on the N pieces of measurement data, where measurement data in the N pieces of measurement data other than the 1^{st} piece of measurement data is received within the preset duration.

In a possible implementation, the core network device further includes a sending unit, configured to send the second information to at least one of the assistant terminals or the to-be-located terminal; or the receiving unit is configured to receive the second information sent by the assistant terminal or the to-be-located terminal.

In a possible implementation, the core network device further includes a sending unit, configured to send first information to at least one of the assistant terminals or the to-be-located terminal, where the first information indicates the assistant terminal to send the measurement data to the core network device.

According to a sixth aspect, a terminal device is provided, including: a receiving unit, configured to receive first information, where the first information indicates the terminal device to send measurement data to a core network device, and the measurement data includes sidelink positioning measurement data between the terminal device and a to-be-located terminal; and a sending unit, configured to send the measurement data to the core network device based on the first information, where the measurement data sent by a plurality of terminal devices is used by the core network device to calculate a location of the to-be-located terminal.

In a possible implementation, the terminal device further includes an obtaining unit, configured to obtain second information, where the second information identifies positioning of the to-be-located terminal; and the sending unit is further configured to send the second information to the core network device.

In a possible implementation, the second information includes an identifier of a location session or an identifier of the to-be-located terminal.

In a possible implementation, the first information further identifies the positioning of the to-be-located terminal.

In a possible implementation, the first information includes an identifier of the core network device.

In a possible implementation, the receiving unit is specifically configured to: receive the first information sent by the to-be-located terminal; or receive the first information sent by a first access and mobility management function AMF network element serving the terminal device.

In a possible implementation, the obtaining unit is specifically configured to: generate the second information; receive, through a first AMF network element serving the terminal device, the second information sent by the core network device; or receive the second information sent by the to-be-located terminal.

In a possible implementation, the sending unit is specifically configured to send the first information and the measurement data to a first AMF network element serving the terminal device, where the first information is used by the first AMF network element to send the measurement data to the core network device.

According to a seventh aspect, a terminal device is provided, including at least one processor, where the at least one processor is configured to be coupled to a memory, and read and execute instructions in the memory, to implement the method performed in any one of the implementations of the first aspect.

Optionally, the terminal device further includes the memory.

According to an eighth aspect, a core network device is provided, including at least one processor, where the at least one processor is configured to be coupled to a memory, and read and execute instructions in the memory, to implement the method performed in any one of the implementations of the second aspect.

Optionally, the core network device further includes the memory.

According to a ninth aspect, a terminal device is provided, including at least one processor, where the at least one processor is configured to be coupled to a memory, and read and execute instructions in the memory, to implement the method performed in any one of the implementations of the third aspect.

Optionally, the terminal device further includes the memory.

According to a tenth aspect, a computer program product is provided, where the computer program product includes computer program code; and when the computer program code is run on a computer, the computer is enabled to perform the method performed in any one of the implementations of the first aspect or the second aspect.

It should be noted that all or some of the computer program code may be stored in a first storage medium, where the first storage medium may be packaged together with a processor, or the first storage medium and the processor may be packaged separately. This is not specifically limited in this application.

According to an eleventh aspect, a computer-readable storage medium is provided, where the computer-readable storage medium stores a computer program; and when the computer program is run on a computer, the computer is enabled to perform the method performed in any one of the implementations of the first aspect, the second aspect, or the third aspect.

According to a twelfth aspect, a chip system is provided, including a processor, configured to invoke a computer program from a memory and run the computer program, so that a communication device in which the chip system is installed performs the method performed in any one of the implementations of the first aspect, the second aspect, or the third aspect.

According to a thirteenth aspect, a communication system is provided. The communication system includes at least one of the terminal device provided in the fourth aspect, the sixth aspect, the seventh aspect, or the ninth aspect, and the core network device provided in the fifth aspect or the eighth aspect.

### BRIEF DESCRIPTION OF DRAWINGS

FIG. 1 shows a network architecture of a 5G system according to an embodiment of this application;
FIG. 2 shows a network architecture of a terminal positioning system according to an embodiment of this application;
FIG. 3 is a diagram of a mobile originated location request procedure;
FIG. 4 is a diagram of a mobile terminated location request procedure;
FIG. 5 is a principle diagram of a ranging method for sidelink positioning;
FIG. 6 is a diagram of an angle of arrival and an angle of departure;
FIG. 7 is a schematic flowchart of positioning requested by an off-network UE;
FIG. 8 is a schematic flowchart of an example of a communication method according to this application;
FIG. 9 is a schematic flowchart of another example of a communication method according to this application;
FIG. 10 is a schematic flowchart of still another example of a communication method according to this application;
FIG. 11 is a schematic flowchart of still another example of a communication method according to this application;
FIG. 12 is a schematic flowchart of still another example of a communication method according to this application;
FIG. 13 is a schematic flowchart of still another example of a communication method according to this application;
FIG. 14 is a schematic flowchart of still another example of a communication method according to this application;
FIG. 15 is a schematic block diagram of an example of a terminal device according to an embodiment of this application;
FIG. 16 is a schematic block diagram of another example of a terminal device according to an embodiment of this application;
FIG. 17 is a diagram of a structure of a terminal device according to an embodiment of this application;
FIG. 18 is a schematic block diagram of a core network device according to an embodiment of this application; and
FIG. 19 is a diagram of a structure of a core network device according to an embodiment of this application.

### DESCRIPTION OF EMBODIMENTS

Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, or a 5th generation (5th generation, 5G) mobile communication system or new radio (new radio, NR) system, or applied to a future communication system or another similar communication system. In addition, embodiments of this application may be further applicable to another future communication system, for example, a 6th generation (6th generation, 6G) mobile communication system. Network architectures and service scenarios described in this application are intended to describe the technical solutions in this application more clearly, and do not constitute a limitation on the technical solutions provided in this application. A person of ordinary skill in the art may be aware that, with evolution of network architectures and emergence of new service scenarios, the technical solutions provided in this application are also applicable to similar technical problems.

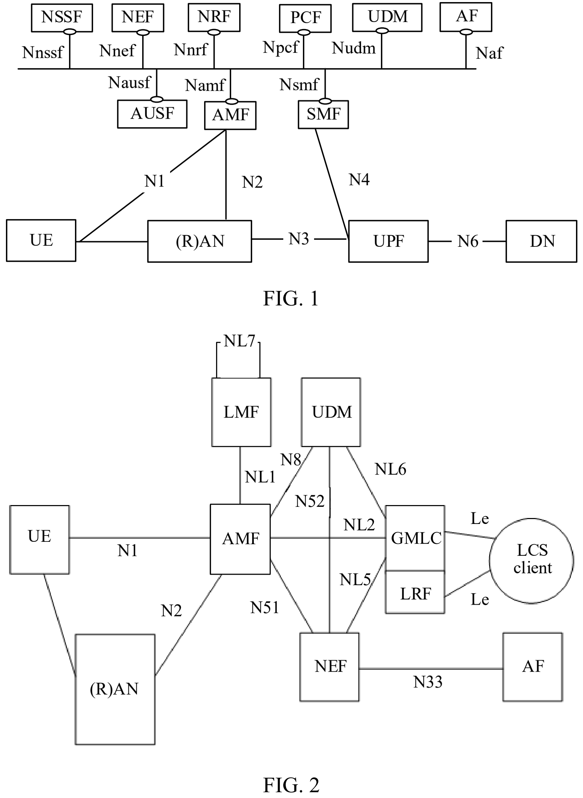

A 5G system is used as an example in this application. FIG. 1 shows a network architecture of a 5G system according to an embodiment of this application. The network architecture may include the following parts: a terminal device, a radio access network (radio access network, RAN), a core network, and a data network (data network, DN).

The following describes in detail the parts in the network architecture.

The terminal device is a device that has a wireless transceiver function. The terminal device is connected to an access network device in a wireless manner, to access a communication system. The terminal device may also be referred to as a terminal, a user equipment (user equipment, UE), a mobile station, a mobile terminal, or the like. The terminal device may be a mobile phone, a tablet computer, a computer having a wireless transceiver function, a virtual reality (virtual reality, VR) terminal device, an augmented reality (augmented reality, AR) terminal device, a wireless terminal in industrial control, a wireless terminal in autonomous driving, a wireless terminal in remote surgery, a wireless terminal in a smart grid, a wireless terminal in transportation safety, a wireless terminal in a smart city, a wireless terminal in a smart home, or the like.

A specific technology and a specific device form that are used by the terminal device are not limited in embodiments of this application. By way of example and not limitation, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, a wearable intelligent device includes a full-featured and large-sized device that may implement all or a part of functions without depending on a smartphone, for example, a smart watch or smart glasses, and includes a device that is dedicated to a specific type of application function and needs to work with another device like a smartphone, for example, a vital sign monitoring device like a smart band, a smart helmet, or smart jewelry. The terminal device may alternatively be a vehicle-mounted module, a vehicle-mounted component, a vehicle-mounted chip, or a vehicle-mounted unit that is built in a vehicle as one or more components or units. The vehicle may use the vehicle-mounted module, a vehicle-mounted module assembly, the vehicle-mounted component, the vehicle-mounted chip, or the vehicle-mounted unit that is built in the vehicle to implement the method in this application. In internet of vehicles communication, a communication terminal mounted on a vehicle is a terminal device, and a roadside unit (roadside unit, RSU) may also be used as a terminal device. A communication terminal mounted on an uncrewed aerial vehicle may also be considered as a terminal device.

The radio access network is configured to implement a radio-related function. A node in the radio access network may also be referred to as an access network device or a base station, and is configured to connect a terminal device to a wireless network. The access network device may be a base station (base station), an evolved NodeB (evolved NodeB, eNodeB) in an LTE system or an LTE-Advanced system (LTE-Advanced, LTE-A), a next generation NodeB (next generation NodeB, gNB) in a 5G communication system, a transmission reception point (transmission reception point, TRP), a baseband unit (baseband unit, BBU), a Wi-Fi access point (access point, AP), a base station in a future mobile communication system, an access node in a Wi-Fi system, or the like. The radio access network device may alternatively be a module or a unit that completes some functions of the base station, for example, may be a central unit (central unit, CU) or a distributed unit (distributed unit, DU). A specific technology and a specific device form that are used by the radio access network device are not limited in embodiments of this application. For example, in a network structure, the radio access network device may be a CU node or a DU node, or an access network device including a CU node and a DU node. Specifically, the CU node is configured to support protocols such as radio resource control (radio resource control, RRC), a packet data convergence protocol (packet data convergence protocol, PDCP), and a service data adaptation protocol (service data adaptation protocol, SDAP). The DU node is configured to support a radio link control (radio link control, RLC) layer protocol, a medium access control (medium access control, MAC) layer protocol, and a physical layer protocol.

The core network may include one or more of the following network elements: an access and mobility management function (access and mobility management function, AMF) network element, a session management function (session management function, SMF) network element, a user plane function (user plane function, UPF) network element, an application function (application function, AF) network element, a policy control function (policy control function, PCF) network element, a unified data management (unified data management, UDM) network element, a network exposure function (network exposure function, NEF) network element, a network slice selection function (network slice selection function, NSSF) network element, an authentication server function (authentication server function, AUSF) network element, a network repository function (network repository function, NRF) network element, and the like.

FIG. 1 shows an interaction relationship between network function entities, and a corresponding interface. For example, a UE and an AMF may interact with each other through an N1 interface, and an interaction message is referred to as an N1 message (message). Some interfaces are implemented as service-oriented interfaces. The UE, an (R)AN, a UPF, and a DN in FIG. 1 are usually referred to as data plane network function entities. Data traffic of a user may be transmitted through a protocol data unit (protocol data unit, PDU) session established between the UE and the DN, and the traffic may pass through two network function entities: the (R)AN and the UPF. Other parts are referred to as control plane network function entities, and are mainly responsible for functions such as authentication and authorization, registration management, session management, mobility management, and policy control, to implement reliable and stable transmission of user-layer traffic. A user plane is used to carry service data, and a control plane is used to carry a signaling message.

The AMF is mainly responsible for signaling processing, for example, functions such as access control, mobility management, attachment and detachment, and gateway selection. When providing a service for a session in a terminal device, the AMF network element provides a control plane storage resource for the session, to store a session identifier, an SMF network element identifier associated with the session identifier, and the like.

The SMF is responsible for user plane network element selection, user plane network element redirection, internet protocol (internet protocol, IP) address allocation, bearer establishment, modification, and release, and quality of service (quality of service, QoS) control.

The UPF is responsible for forwarding and receiving user data in a terminal device. The user plane function network element may receive user data from a data network, and transmit the user data to the terminal device through the access network device. The UPF network element may further receive the user data from the terminal device through the access network device, and forward the user data to the data network. Transmission resources and scheduling functions in the UPF network element that provide services for the terminal device are managed and controlled by the SMF network element.

The NEF mainly supports secure interaction between a 3GPP network and a third-party application.

The AF mainly supports interaction with a 3GPP core network to provide a service, for example, application influence on traffic routing and a policy control function, or providing some third-party services for a network side.

The PCF is responsible for providing policy control decisions, providing policy rules to control plane functions, and providing flow-based charging control functions.

The NSSF is mainly responsible for selecting a network slice, and determining, based on slice selection assistance information, subscription information, and the like of a UE, a network slice instance that the UE is allowed to access.

The UDM is mainly responsible for management of subscription data of a UE, including storage and management of a UE identifier, access authorization of the UE, and the like.

The AUSF supports authentication for 3GPP access and non-3GPP access.

The NRF supports registration and discovery of a network function.

The foregoing "network element" may also be referred to as an "entity" or an "apparatus". This is not limited in this application. In actual deployment, network elements may be co-located. When two network elements are co-located, interaction between the two network elements provided in embodiments of this application becomes an internal operation of the co-located network elements or may be omitted.

The DN provides a data transmission service for a terminal, and may be a public data network (public data network, PDN) network, for example, the internet (internet), or may be a local access data network (local access data network, LADN), for example, a network of a mobile edge computing (mobile edge computing, MEC) node.

FIG. 2 shows a network architecture of a terminal positioning system according to an embodiment of this application. The positioning architecture is based on the 5G network shown in FIG. 1. In the positioning architecture, in addition to a UE and a RAN, the following network elements in a core network are mainly included: an AMF network element, a location management function (location management function, LMF) network element, an NEF network element, a UDM network element, an AF network element, a gateway mobile location center (gateway mobile location center, GMLC) network element, and a location retrieval function (location retrieval function, LRF) network element.

The LMF is mainly responsible for calculating and managing location information of a terminal device. The NEF is mainly configured to provide 5G network capability and event exposure, receive related external information, and the like. The GMLC is mainly related to a location service of the terminal device. The LRF is mainly responsible for retrieving or verifying location information. The LRF and the GMLC may be disposed as a combination or disposed separately. The GMLC is connected to a location services (location services, LCS) client (client), so that the GMLC obtains a positioning requirement of a terminal device specified by the LCS client, and sends the positioning requirement to the AMF in the core network, to request the core network to feed back location information of the terminal device. There is an interface between the GMLC and each of the UDM, the NEF, and the AMF. It should be particularly pointed out that the LCS client is an external application, for example, a map application.

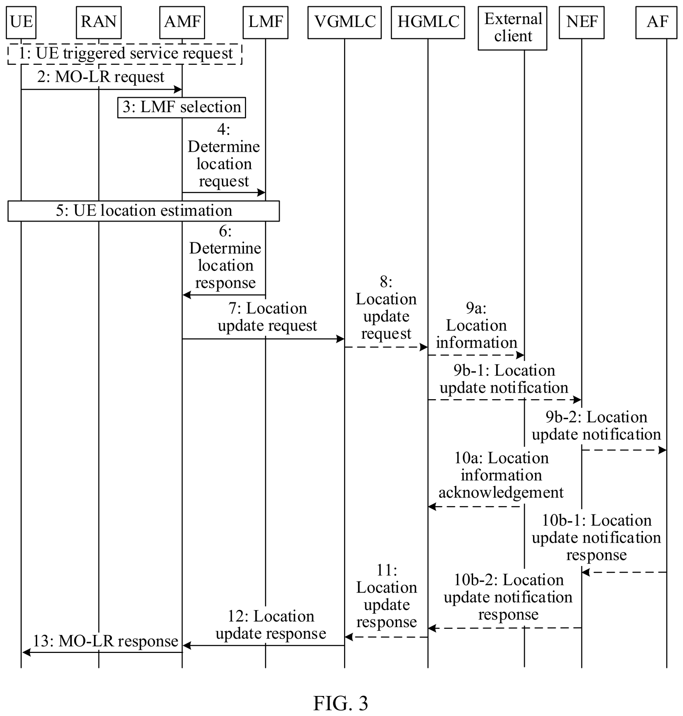

Specifically, as shown in FIG. 1, 3GPP defines control plane-based LCS, and location information is exchanged among the UE, a network node, and a positioning server through a control plane. The LMF manages and controls a location service request of a target UE. The LMF delivers positioning-related assistance information to the UE according to the LPP protocol (LTE positioning protocol). The NRPPa (NR positioning protocol A) between the LMF and the RAN is used to control positioning measurement, including uplink measurement performed by the RAN or downlink measurement performed by the UE. The LMF can interact with the target UE according to the LPP protocol to deliver positioning-related assistance data. The LMF is responsible for network positioning solution selection. The positioning solution selection is determined based on the LCS client, precision and latency required for QoS, and positioning capabilities of the UE and the RAN. When a plurality of positioning methods are used for hybrid location services, the LMF can combine all received results and provide a location estimate.

In a 5G location procedure, the AMF receives a location information request from the UE or the GMLC. The AMF may send a location service request to the LMF. The LMF processes the request and obtains positioning data by interacting with the RAN and the UE. The LMF calculates a user location and returns a location service response to the AMF. The AMF returns a location service result to the UE or provides capability exposure through the GMLC. In this procedure, the RAN completes measurement and reporting of a radio signal characteristic. The AMF provides transmission of location service messages between the UE and the LMF and between the RAN and the LMF. The GMLC is responsible for interworking with the external LCS client to locate the target UE.

With rapid development of mobile communication, universal use of new types of services, for example, data services such as video chat and VR/AR, increases a bandwidth requirement of a user. Device-to-device (device-to-device, D2D) communication allows direct communication between UEs without intermediate forwarding by a base station. If within a short distance range, a sender UE and a receiver UE may directly communicate with each other after mutual discovery. In D2D communication, UEs communicate with each other through a PC5 (ProSe communication 5) interface. A communication link between the two UEs is referred to as a sidelink (sidelink, SL), and is used for information transmission between a data plane and a control plane.

5G enables application diversification in various industries. Requirements of users for obtaining location information under a 5G network are increasingly universal. A large quantity of application scenarios, such as internet of vehicles, autonomous driving, smart manufacturing, smart logistics, and uncrewed aerial vehicle, have higher requirements on positioning capabilities. For example, implementation of functions such as vehicle platooning and active collision avoidance in the internet of vehicles not only requires high positioning accuracy, but also requires support for high-speed movement and ultra-low-latency positioning capabilities.

However, a large quantity of applications such as automated guided vehicle (automated guided vehicle, AGV) and AR/VR are for indoor scenarios, and a satellite positioning system cannot cover the applications. Therefore, in the 5G network, a network positioning technology needs to be enhanced to improve positioning accuracy. For example, when a UE falls beyond coverage of a network or cannot obtain sufficient cell signals, the network may locate the UE by using a combination of Uu positioning (that is, network side positioning) and SL positioning, to ensure positioning accuracy. The Uu positioning is further classified into a mobile originated location request procedure and a mobile terminated location request procedure. The following describes specific procedures of various positioning methods with reference to accompanying drawings.

### (1) Mobile originated location request procedure (MO-LR procedure).

FIG. 3 is a diagram of a procedure in which a terminal device UE requests, from a network, to obtain a location of the UE, that is, a mobile originated location request procedure (5GC-MO-LR Procedure). As shown in FIG. 3, the procedure includes step 1 to step 13.

Step 1: A UE in an idle state initiates a service request (triggered service request) procedure to complete signaling interaction with an AMF.

Step 2: The UE sends a mobile originated location request (mobile originated location request, MO-LR) request message to the AMF, where the message may be included in an uplink NAS transport message (UL NAS TRANSPORT message). The UE may request different location service types: (A) a location estimate of the UE, (B) sending of the location estimate of the UE to an LCS client or an AF, and (C) location assistance information.

For (A) or (B), the message may further include LCS QoS information (such as location accuracy accuracy, response time response time, and an LCS QoS class LCS QoS class). The LCS QoS class may be divided into a best effort class (Best Effort Class) and an assured class (Assured Class). For (B), the message may further include identification information of the LCS client or the AF, and the AMF further needs to allocate a GMLC address.

Step 3: The AMF selects an appropriate LMF based on information such as a location of the UE.

Step 4: The AMF sends a determine location request (Nlmf_Location_DetermineLocation Request) message to the selected LMF. The message includes a serving cell identity (serving cell identity) of the UE, and indicates to request location information of the UE or the location assistance data (in other words, indicates that the requested location service type is (A), (B), or (C)).

Step 5: The LMF initiates positioning of the UE, obtains positioning measurement data by interacting with a RAN and the UE, and calculates the location estimate of the UE based on the positioning measurement data.

Specifically, the UE performs positioning measurement based on a positioning reference signal (positioning reference signal, PRS) sent by a neighboring cell, to obtain the positioning measurement data, and sends the positioning measurement data to the LMF. The positioning measurement data includes information such as a cell identifier (for example, a cell global identifier, cell global identifier), a downlink reference signal received power of each cell, radio wave/PRS transmission time between the UE and each cell, and a round-trip signal time difference between the UE and each cell base station.

Step 6: When the location estimate meets the requested LCS QoS information, the LMF returns the location estimate of the UE to the AMF, where the location estimate of the UE may be included in a determine location response (Nlmf_Location_DetermineLocation Response) message.

Step 7: The AMF sends a location update request (Ngmlc_Location_LocationUpdate Request) message to the GMLC, where the message includes a location estimate result, a UE identifier, LCS QoS information requested by the UE, and the like.

Steps 8 to 11: If the UE does not request the location service type (B), steps 8 to 11 are skipped. Otherwise, the GMLC sends the location estimate result of the UE to the LCS client or the AF. If the UE does not roam, a VGMLC (Visited GMLC) and an HGMLC (home GMLC) are the same entity.

Step 12: The GMLC sends a location update response (Ngmlc_Location_LocationUpdate Response) message to the AMF.

Step 13: The AMF sends an MO-LR response message to the UE, where the response message may be included in a downlink NAS transport message (DL NAS TRANSPORT message). The message includes the location estimate result, and may further include information such as whether the result meets requested positioning accuracy.

### (2) Mobile terminated location request procedure (MT-LR procedure).

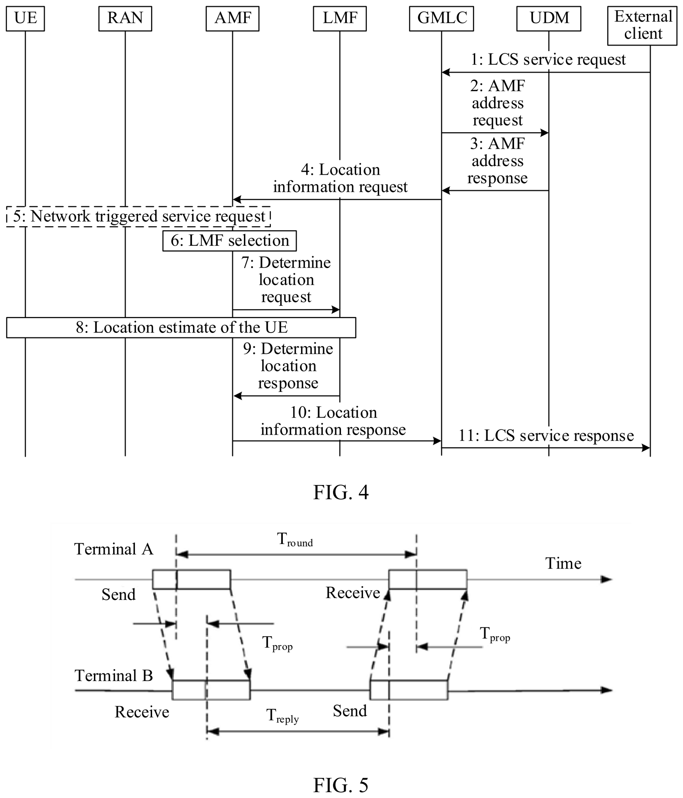

FIG. 4 is a diagram of a procedure in which an LCS client or an AF requests, from a network, to obtain location information of a target UE, that is, a mobile terminated location request (mobile terminated location request, MT-LR) procedure (5GC-MT-LR procedure). As shown in FIG. 4, the procedure includes step 1 to step 11.

Step 1: An external client (for example, the LCS client) sends an LCS service request (LCS service request) to a GMLC to request to obtain a location of the target UE, where the request message includes information such as an identifier of the target UE (for example, a generic public subscription identifier (generic public subscription identifier, GPSI) or a subscription permanent identifier (subscription permanent identifier, SUPI)), required QoS (required QoS), and scheduled location time (scheduled location time).

Step 2 and step 3: The GMLC sends an AMF address request (Nudm_UECM_Get Request) message to a UDM, and receives an AMF address response (Nudm_UECM_Get Response) message sent by the UDM, to obtain, from the UDM, an address of an AMF currently serving the UE.

Step 4: The GLMC obtains an LCS privacy profile (LCS privacy profile) from the UDM, and determines, based on the LCS privacy profile, that the external client is authorized to obtain the location of the target UE. In this case, the GMLC sends a location information request (Namf_Location_ProvidePositionInfo Request) message to the AMF, to request to obtain the location of the UE, where the message may include information such as the SUPI and the required QoS.

Step 5: If the UE is currently in an idle state, the AMF initiates a service request procedure to complete a signaling connection with the UE.

Step 6: The AMF selects an appropriate LMF.

Step 7: The AMF sends a determine location request (Nlmf_Location_DetermineLocation Request) message to the LMF, to request to obtain a current location of the UE, where the message further includes information such as a serving cell identity (serving cell identity) of the UE.

Step 8: The LMF initiates positioning of the UE, obtains positioning measurement data by interacting with a RAN and the UE, and calculates a location estimate of the UE. For related content, refer to step 5 in FIG. 3.

When requesting positioning from the UE, the LMF further sends the scheduled location time (scheduled location time) to the UE. In this way, the UE may enter a connected state (connected state) before the scheduled location time. For example, the UE proactively initiates a service request procedure Service Request procedure at a specific time point before the scheduled location time, so that the network does not page the UE again, and positioning is performed at the scheduled location time.

Step 9: The LMF sends a determine location response (Nlmf_Location _DetermineLocation Response) message to the AMF, to return the current location of the UE and the implemented accuracy.

Step 10: The AMF sends a location information response (Namf_Location_ProvidePositionInfo Response) message to the GMLC, to return the current location of the UE and the implemented accuracy.

Step 11: The GMLC sends an LCS service response (LCS service response) message to the external client, where the information includes information such as the current location of the UE and the implemented accuracy.

It should be noted that, for periodic positioning or event-triggered positioning, after step 8, the LMF further sends an LCS periodic-triggered invoke request (LCS Periodic-Triggered Invoke Request) message to the UE, where the message includes the foregoing scheduled location time, a positioning periodicity or a positioning interval, and a deferred routing identifier (deferred routing identifier). When the UE detects that an event occurs (for example, when the positioning periodicity expires), the UE performs location measurement and reports corresponding positioning measurement data to the LMF.

The scheduled location time may be understood in two manners: (1) The UE performs positioning measurement at the scheduled location time, and then reports the corresponding positioning measurement data to the LMF. (2) The UE performs positioning measurement at a specific time point before the scheduled location time, and then reports the corresponding positioning measurement data to the LMF at the scheduled location time. The deferred routing identifier is used by the AMF to select an LMF processing the positioning of the UE when the UE subsequently reports the positioning measurement data, and is further used by the LMF to identify a location session associated with the positioning measurement data.

### (3) SL positioning procedure.

A relative location between terminals may be determined by using a relative positioning method. In this case, the terminal needs to have a sidelink (sidelink) positioning capability. Relative positioning may be determining a relative distance and/or a relative angle between terminals. The relative distance can be obtained through ranging, and the relative angle can be obtained through angle measurement.

FIG. 5 is a principle diagram of a ranging method for sidelink positioning. As shown in FIG. 5, the method for ranging between terminals specifically includes: A startup terminal (a terminal A) sends an initial ranging signal, and a feedback terminal (a terminal B) sends a feedback ranging signal used for feedback to the startup terminal after receiving the initial ranging signal. After receiving the feedback ranging signal, the startup terminal calculates a relative distance between the two terminals based on a time difference between sending the initial ranging signal and receiving the feedback ranging signal. Specifically, distance between terminals = time of flight × speed of light. A process of calculating the time of flight (time of flight, TOF) may include:

Step a1: The terminal A measures duration T_{round}, to be specific, a difference between time when the terminal A receives a positioning measurement signal of the terminal B and time when the terminal A sends a positioning measurement signal.

Step a2: The terminal B calculates duration T_{reply}, to be specific, a difference between time when the terminal B sends the positioning measurement signal and time when the terminal B receives the positioning measurement signal of the terminal A.

Step a3: The terminal B sends the duration T_{reply} to the terminal A.

Step a4: Calculate the time of flight as follows: TOF = Tₚᵣₒₚ = (T_{round} - T_{reply})/2.

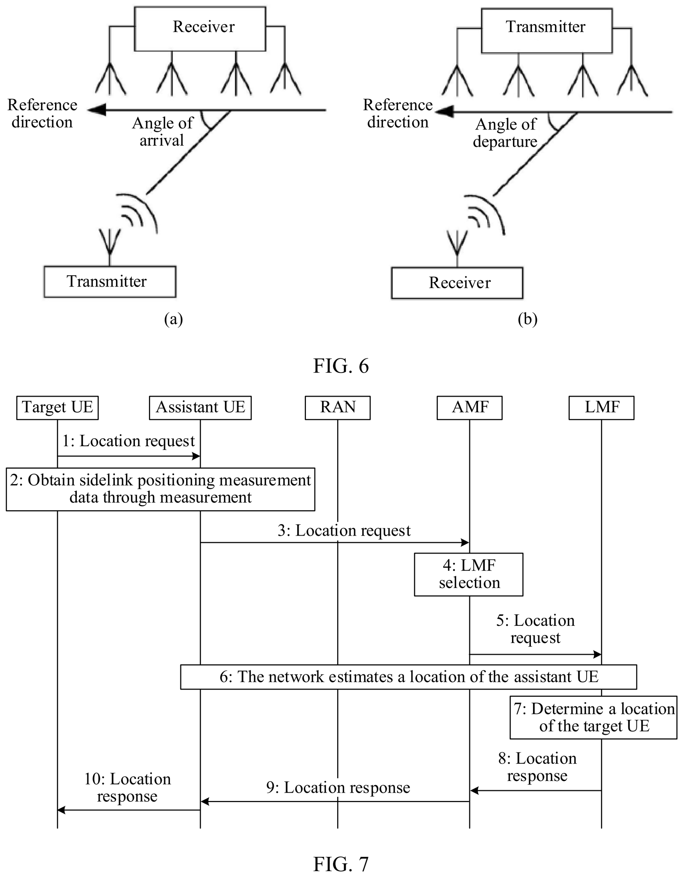

The method for angle measurement between terminals includes an angle of arrival (angle of arrival, AoA) method and an angle of departure (angle of departure, AoD) method. FIG. 6 is a diagram of an angle of arrival and an angle of departure. As shown in part (a) in FIG. 6, the angle of arrival may be an included angle between a direction in which a receiver of a terminal receives a signal and a reference direction, and a relative angle of the terminal B relative to the terminal A may be determined based on the angle of arrival at which a signal sent by the terminal B arrives at the terminal A. As shown in part (b) in FIG. 6, the angle of departure is an included angle between a direction in which a transmitter of a terminal sends a signal and a reference direction, and a relative angle of the terminal B relative to the terminal A may be determined based on the angle of departure at which a signal sent by the terminal A departs from the terminal A.

For the ranging method, sidelink positioning measurement data may be T_{round} and T_{reply}. For the AOA angle measurement method, the sidelink positioning measurement data may be a phase difference or a time difference between signals arriving at different antenna units. For the AOD angle measurement method, the sidelink positioning measurement data may be a phase difference or a time difference between signals departing from different antenna units.

### (4) Positioning procedure combining SL positioning and Uu positioning.

When a target UE (target UE) is off the network, the target UE can request an LMF to calculate an absolute location of the target UE through an on-network assistant UE (Assisted UE/located UE). In other words, the assistant UE (assistant terminal) is used to assist in locating the target terminal. The target terminal herein may be considered as a to-be-located terminal. In this case, a method combining SL positioning and Uu positioning may be used to determine the location of the target UE. For example, the location of the target UE is determined by using a combination of **"(1) Mobile originated location request procedure (MO-LR procedure)"** and **"(3) SL positioning procedure".** FIG. 7 is a schematic flowchart of positioning requested by an off-network UE. As shown in FIG. 7, the following steps 1 to 10 are specifically included.

Step 1: A target UE sends a location request message to an assistant UE, where the location request message may be, for example, an assistant measurement (NW assistant ranging) message or a sidelink positioning request (sidelink positioning request) message.

Step 2: A ranging operation is performed between the target UE and the assistant UE, for example, a relative distance and a relative angle between the target UE and the assistant UE are measured. For details, refer to the content in **"(3) SL positioning procedure",** to obtain sidelink positioning measurement data.

Step 3: The assistant UE sends, to an AMF, a location request message including the sidelink positioning measurement data, where the location request message may be, for example, an MO-LR request message, and may be included in an uplink NAS transport message.

Step 4: The AMF selects an appropriate LMF.

Step 5: The AMF sends, to the LMF, the location request message including the sidelink positioning measurement data.

Step 6: The LMF estimates a location of the assistant UE, in other words, performs positioning measurement on the assistant UE, to obtain the location of the assistant UE.

Step 7: The LMF calculates a location of the target UE based on the location of the assistant UE obtained in step 6 and the sidelink positioning measurement data obtained in step 5.

Step 8 to step 10: The LMF sends the location of the target UE to the target UE through the AMF and the assistant UE in sequence. Specifically, the LMF may send, to the AMF, a location response message carrying location information of the target UE, where the location response message may be, for example, a determine sidelink location response (Nlmf_Location _DetermineSidelinkLocation Response) message. The AMF sends, to the assistant UE, a location response message carrying the location information of the target UE, where the location response message may be, for example, an MO-LR response message, and the message may be carried in a downlink NAS transport message (DL NAS TRANSPORT message). The assistant terminal sends a location response message carrying the location information of the target UE to the target terminal, where the location response message may be, for example, an assistant ranging response (assistant ranging response) message or a sidelink positioning response (sidelink positioning response) message.

In conclusion, the target UE may be located by using a positioning method combining SL positioning and Uu positioning. Specifically, the sidelink positioning measurement data may be first obtained through the SL positioning between the target UE and the assistant UE, where the sidelink positioning measurement data includes, for example, information such as a distance between the target UE and the assistant UE and/or a relative angle between the target UE and the assistant UE, and the assistant UE reports the sidelink measurement data to a network side. Then, the network side locates the assistant UE to obtain an absolute location of the assistant UE. Finally, the network side determines an absolute location of the target UE based on the absolute location of the assistant UE and the sidelink positioning measurement data reported by the assistant UE, and sends location information to the target UE through the assistant UE. In this way, an entire positioning process is completed.

When one assistant UE is used to locate the target UE, positioning accuracy is limited, and it is difficult to meet a requirement on high positioning accuracy in some application scenarios. How to use a plurality of assistant UEs to locate the target UE to improve the positioning accuracy becomes a problem to be resolved.

For the foregoing problem, an embodiment of this application provides a communication method. According to the communication method, a to-be-located terminal (that is, the foregoing target UE) first obtains an identifier of a core network device that performs location calculation, and then separately sends first information to a plurality of assistant terminals (that is, the foregoing assistant UEs), where the first information indicates the assistant terminal to send measurement data to the core network device. Because the first information sent to the plurality of assistant terminals indicates the core network device, after receiving the first information, the plurality of assistant terminals send respective measurement data to the same core network device based on an indication of the first information, so that the core network device can calculate a location of the to-be-located terminal based on a plurality of pieces of measurement data sent by the plurality of assistant terminals. According to the communication method provided in embodiments of this application, the plurality of assistant terminals can participate in positioning of a same to-be-located terminal, to improve positioning accuracy of the to-be-located terminal.

For example, a to-be-located terminal UE #0 may first obtain an identifier of a core network device LMF #0, and the to-be-located terminal determines, based on the identifier, that the LMF #0 is used to calculate a location of the UE #0. Then, the UE #0 sends the first information to assistant terminals UE #1, UE #2, and UE #3 in any manner, for example, unicast/multicast/broadcast, where the first information indicates each assistant terminal to send the measurement data to the LMF #0. After receiving the first information, the UE #1, the UE #2, and the UE #3 send respective measurement data to the LMF #0 based on the indication of the first information. After receiving three pieces of measurement data respectively sent by the three assistant terminals, the LMF #0 may calculate the location of the UE #0 based on the three pieces of measurement data, so that positioning accuracy of the UE #0 is high.

The following describes the communication method provided in this embodiment of this application with reference to the accompanying drawings. In this embodiment, the terminal may be, for example, the UE in FIG. 1 to FIG. 4, and the core network device may be, for example, the LMF in FIG. 2 to FIG. 4. More specifically, in this embodiment, the to-be-located terminal may be, for example, the target UE in FIG. 7, the assistant terminal may be, for example, the assistant UE in FIG. 7, and the core network device may be, for example, the LMF in FIG. 7.

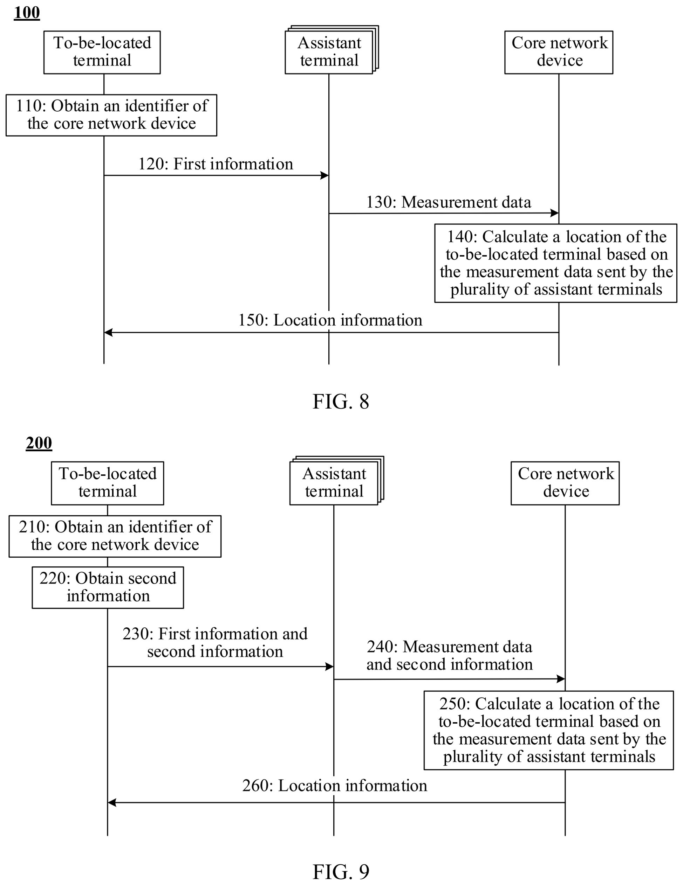

FIG. 8 is a schematic flowchart of a communication method 100 according to this application. The following describes the communication method 100 provided in an embodiment of this application with reference to FIG. 8. The method 100 includes the following steps.

Step 110: A to-be-located terminal obtains an identifier of a core network device.

Specifically, the to-be-located terminal is a terminal device that has a positioning requirement or needs to be located, for example, the foregoing target UE. An assistant terminal is a terminal device that assists in locating the to-be-located terminal, in other words, participates in positioning of the to-be-located terminal, for example, the foregoing assistant UE. The to-be-located terminal may determine, in advance through a series of signaling interactions, which surrounding terminal can be used to assist in positioning, and determine the terminal that can be used to assist in positioning as the assistant terminal.

In some cases, the to-be-located terminal may fall beyond coverage of a network or cannot obtain sufficient cell signals, in other words, the to-be-located terminal may be an off-network UE, and therefore an assistant terminal is needed to assist in positioning. In some other cases, the to-be-located terminal may alternatively be an on-network UE. This is not specifically limited in this application.

When the to-be-located terminal needs to be located, the identifier of the core network device may be first obtained, where the core network device may be any core network element that is pre-assigned to calculate a location of the to-be-located terminal, for example, may be an LMF, but is not limited thereto. After obtaining the identifier, the to-be-located terminal may learn or determine, based on the identifier, which specific core network device calculates the location of the to-be-located terminal.

Herein, the identifier (identity, ID) of the core network device is any information that can uniquely identify an identity of the core network device, and a terminal device can explicitly learn, based on the identifier, which specific core network device performs location calculation. For example, the identifier of the core network device may be an internet protocol (internet protocol, IP) address, a fully qualified domain name (fully qualified domain name, FQDN), or the like, but is not limited thereto.

The to-be-located terminal may obtain the identifier of the core network device in any manner. For example, the to-be-located terminal may request the identifier of the core network device from a network side, or the network side proactively delivers the identifier of the core network device under some conditions. An obtaining manner is not specially limited in this application.

Optionally, the to-be-located terminal may receive the identifier of the core network device sent by a PCF network element, in other words, obtain the identifier of the core network device from the PCF network element. For example, in a registration procedure of the to-be-located terminal, the PCF network element sends policy information to the terminal, where the policy information includes the identifier of the core network device.

Optionally, the to-be-located terminal pre-configures the identifier of the core network device. For example, the identifier of the core network device is pre-configured in the to-be-located terminal device or a subscriber identity module (subscriber identity module, SIM).

Optionally, when the to-be-located terminal is in an off-network state or not in an on-network state, or there is no non-access stratum (non-access stratum, NAS) connection, the to-be-located terminal may receive, through one assistant terminal, the identifier of the core network device sent by a first AMF network element serving the assistant terminal, in other words, obtain the identifier of the core network device from a first AMF network element serving an assistant terminal. For example, the assistant terminal initiates "(1) Mobile originated location request procedure (MO-LR procedure)". In the procedure, the assistant terminal obtains the identifier of the core network device from the first AMF network element serving the assistant terminal, and the assistant terminal sends the identifier of the core network device to the to-be-located terminal.

Optionally, when the to-be-located terminal is in an on-network state or there is a NAS connection, the to-be-located terminal may receive the identifier of the core network device sent by a second AMF network element serving the to-be-located terminal, in other words, obtain the identifier of the core network device from the second AMF network element serving the to-be-located terminal. For example, the to-be-located terminal initiates **"(1) Mobile originated location request procedure (MO-LR procedure)".** In the procedure, the to-be-located terminal obtains the identifier of the core network device from the second AMF network element serving the to-be-located terminal. The second AMF network element herein and the first AMF network element may be a same AMF network element, or may be different AMF network elements. This is not limited in this application.

Optionally, the to-be-located terminal further obtains capability information of the core network device. For example, the capability information of the core network device is whether the core network device supports user plane transmission. If the core network device supports the user plane transmission, the user plane transmission of positioning data (for example, sidelink positioning measurement data between the assistant terminal and the to-be-located terminal) between a terminal device (for example, the to-be-located terminal or the assistant terminal) and the core network device may be performed. For example, the to-be-located terminal receives the capability information of the core network device sent by the PCF network element, the second AMF network element serving the to-be-located terminal, or one assistant terminal.

Step 120: The to-be-located terminal sends first information to a plurality of assistant terminals.

Correspondingly, the plurality of assistant terminals receive the first information from the to-be-located terminal.

The first information indicates the assistant terminals to send measurement data to the core network device, where the measurement data includes the sidelink positioning measurement data between the assistant terminals and the to-be-located terminal, and the measurement data sent by the plurality of assistant terminals is used by the core network device to calculate the location of the to-be-located terminal.

After obtaining the identifier of the core network device, the to-be-located terminal determines, based on the identifier, that the core network device corresponding to the identifier is used to calculate the location of the to-be-located terminal, or the to-be-located terminal learns that the core network device calculates the location of the to-be-located terminal. Then, the to-be-located terminal may send the first information to the plurality of (for example, two, three, four, or more) assistant terminals in any manner, for example, unicast/multicast/broadcast, where the first information indicates the assistant terminal to send the measurement data to the core network device.

The measurement data herein includes the sidelink positioning measurement data between the assistant terminal and the to-be-located terminal, and the plurality of assistant terminals may perform location measurement on the to-be-located terminal by using the SL positioning method described in **"(3) SL positioning procedure",** to obtain the sidelink positioning measurement data.

Optionally, the measurement data herein may include distance measurement information between the to-be-located terminal and the assistant terminal, for example, may include measurement duration T_{round}, calculation duration T_{reply}, time of flight TOF or Tₚᵣₒₚ, and the like.

Optionally, the measurement data herein may include relative distance information between the to-be-located terminal and the assistant terminal, and the assistant terminal or the to-be-located terminal obtains the relative distance information based on the distance measurement information. For example, the relative distance information is obtained through calculation based on the foregoing time of flight TOF.

Optionally, the measurement data herein may include angle information such as an angle of arrival AoA and an angle of departure AoD between the to-be-located terminal and the assistant terminal, for example, may include information such as a phase difference or a time difference between signals arriving at different antenna units, or a phase difference or a time difference between signals departing from different antenna units.

In this embodiment of this application, the first information indicates the assistant terminal to send the measurement data to the core network device. The indication herein may be an explicit indication or an implicit indication, or may be a direct indication or an indirect indication. This is not limited in this application.

For example, the first information may be an explicit indication, and includes the identifier of the core network device. Alternatively, the first information is the identifier of the core network device. In this case, the identifier of the core network device may be carried in a specific information element. According to a specification of a system or a protocol, after receiving the identifier of the core network device, the assistant terminal may further determine that the measurement data needs to be sent to the core network device. The "protocol" herein may be a standard protocol in the communication field, for example, may include the LTE protocol, the 5G protocol, the NR protocol, and a related protocol applied to a future communication (for example, 6G) system. This is not limited in this application.

In this embodiment of this application, that the first information indicates the assistant terminal to send the measurement data to the core network device may be equivalently replaced with or understood as that the first information indicates that the core network device calculates the location of the to-be-located terminal, or equivalently replaced with or understood as that the first information indicates that the core network device manages positioning of the to-be-located terminal. For example, the first information includes the identifier of the core network device, and after receiving the first information, the assistant terminal sends the measurement data to the core network device.

Step 130: Each of the plurality of assistant terminals sends the measurement data to the core network device based on the first information.

Correspondingly, the core network device receives the measurement data sent by each of the plurality of assistant terminals.

The measurement data sent by each assistant terminal is the sidelink positioning measurement data between each assistant terminal and the to-be-located terminal. The plurality of assistant terminals send a plurality of pieces of measurement data to the core network device, where the plurality of assistant terminals are in one-to-one correspondence with the plurality of pieces of measurement data.

After receiving the first information, the plurality of assistant terminals may send respective measurement data to the core network device based on the first information. After reading content of the first information, the assistant terminal may directly or indirectly send the first information to the core network device. For example, each assistant terminal may send the measurement data to the core network device (for example, an LMF) through an AMF network element serving the assistant terminal.

In a possible implementation, that the assistant terminal sends the measurement data to the core network device based on the first information may include, be equivalently replaced with, or be understood as that the assistant terminal sends the measurement data and the first information to the first AMF network element serving the assistant terminal, where the first information is used by the first AMF network element to send the measurement data to the core network device. To be specific, the first AMF network element performs route selection based on the first information, and forwards the measurement data to the core network device.

In another possible implementation, that the assistant terminal sends the measurement data to the core network device based on the first information may include, be equivalently replaced with, or be understood as that the assistant terminal sends the measurement data and the identifier of the core network device to the first AMF network element serving the assistant terminal, where the identifier of the core network device is used by the first AMF network element to send the measurement data to the core network device. To be specific, the first AMF network element performs route selection based on the identifier of the core network device, and forwards the measurement data to the core network device.

In another possible implementation, that the assistant terminal sends the measurement data to the core network device based on the first information may include, be equivalently replaced with, or be understood as that the assistant terminal sends the measurement data to the core network device through a protocol data unit (protocol data unit, PDU) session, where a destination address of the measurement data is an IP address of the core network device. Optionally, the assistant terminal receives third information from the to-be-located terminal, where the third information indicates that the measurement data is sent to the core network device through a user plane or the PDU session, or the third information indicates that the core network device supports the user plane transmission. After receiving the third information, the assistant terminal sends the measurement data to the core network device through the PDU session.

Step 140: The core network device calculates the location of the to-be-located terminal based on the measurement data sent by the plurality of assistant terminals.

After receiving the measurement data sent by the plurality of assistant terminals, the core network device may calculate the location of the to-be-located terminal based on the received plurality of pieces of measurement data. For example, the core network device may first obtain an absolute location of each assistant terminal by using the foregoing Uu positioning method, for example, **"(2) Mobile terminated location request procedure (MT-LR procedure)".** The core network device may be used as an external client, for example, an LCS client. Then, the location of the to-be-located terminal is calculated based on the absolute location of each assistant terminal and the corresponding measurement data.

In a specific example, a to-be-located terminal UE #0 may first obtain an identifier of a core network device LMF #0, and then the UE #0 sends first information to assistant terminals UE #1, UE #2, and UE #3, where the first information indicates each assistant terminal to send measurement data to the LMF #0, or the first information indicates that the LMF #0 calculates a location of the to-be-located terminal UE #0, or the first information indicates that the LMF #0 manages positioning of the to-be-located terminal UE #0. The first information may include the identifier of the LMF #0. For example, the first information may be the identifier of the LMF #0. After receiving the first information, the UE #1, the UE #2, and the UE #3 respectively send measurement data data #1, data #2, and data #3 to the LMF #0 based on the first information. The LMF #0 initiates positioning of each assistant terminal, and obtains absolute locations of the three assistant terminals, namely, a location #1, a location #2, and a location #3. The LMF #0 calculates the location of the UE #0 based on the three pieces of measurement data (the data #1, the data #2, and the data #3) and the absolute locations (the location #1, the location #2, and the location #3) of the three assistant terminals. For example, the LMF #0 performs preliminary location estimation on the to-be-located terminal based on the location #1 and the data #1, to obtain a location estimate result result #1; performs preliminary location estimation on the to-be-located terminal based on the location #2 and the data #2, to obtain a location estimate result result #2; and performs preliminary location estimation on the to-be-located terminal based on the location #3 and the data #3, to obtain a location estimate result result #3. Finally, the location of the to-be-located terminal (that is, the UE #0) is determined based on the three location estimate results result #1, result #2, and result #3.

It should be understood that the foregoing examples are merely used to facilitate understanding and description of this embodiment of this application, and a specific processing process or a specific algorithm of the core network device is not limited in this application. For example, the core network device may not need to explicitly calculate the foregoing result #1, result #2, and result #3, but inputs parameters such as the data #1, the data #2, the data #3, the location #1, the location #2, and the location #3 into a preset algorithm or model, to directly obtain the location of the to-be-located terminal.

Step 150: The core network device sends location information to the to-be-located terminal.

After calculating the location of the to-be-located terminal, the core network device may send the location information to the to-be-located terminal. For example, the core network device may forward the location information to the to-be-located terminal through one of the assistant terminals. In this case, the core network device sends the location information to the assistant terminal through the first AMF network element serving the assistant terminal, and the assistant terminal sends the location information to the to-be-located terminal through a sidelink. For another example, when the to-be-located terminal is in an on-network state, the core network device may alternatively send the location information to the to-be-located terminal through the second AMF network element serving the to-be-located terminal (in this case, the location information can be sent without the assistant terminal).

According to the communication method 100 provided in this embodiment of this application, the to-be-located terminal first obtains the identifier of the core network device. The core network device may be any network element, for example, an LMF, pre-assigned to calculate the location of the to-be-located terminal. After obtaining the identifier, the to-be-located terminal may learn or determine, based on the identifier, which specific core network device calculates the location of the to-be-located terminal. Then, the to-be-located terminal may send the first information to each of the plurality of assistant terminals in any manner, for example, unicast/multicast/broadcast, where the first information indicates the assistant terminal to send the measurement data to the core network device, or the first information indicates that the core network device calculates the location of the to-be-located terminal, or the first information indicates that the core network device manages positioning of the to-be-located terminal. Because the first information sent to the plurality of assistant terminals indicates the core network device, after receiving the first information, the plurality of assistant terminals send respective measurement data to the same core network device based on the first information, so that the core network device can calculate the location of the to-be-located terminal based on the plurality of pieces of measurement data sent by the plurality of assistant terminals. According to the communication method 100 provided in this embodiment of this application, the plurality of assistant terminals can participate in positioning of a same to-be-located terminal, to improve positioning accuracy of the to-be-located terminal.

FIG. 9 is a schematic flowchart of a communication method 200 according to this application. Compared with the method 100 shown in FIG. 8, the method 200 according to an embodiment mainly adds procedures of obtaining and sending second information, and the second information identifies positioning of a to-be-located terminal.

Specifically, according to the method 200, after obtaining the second information, the to-be-located terminal further sends the second information to an assistant terminal, and the assistant terminal forwards the second information to a core network device. Because the core network device may receive measurement data for a plurality of different to-be-located terminals from a same assistant terminal, the core network device can learn, based on the second information, which received measurement data is for a same to-be-located terminal. In this case, a plurality of pieces of measurement data can be associated, and the core network device can calculate a location of the to-be-located terminal based on the plurality of pieces of measurement data for the same to-be-located terminal. This avoids using sidelink positioning measurement data between the assistant terminal and a to-be-located terminal A to calculate a location of a to-be-located terminal B, to ensure accuracy of a positioning result.

The following describes the communication method 200 provided in an embodiment of this application with reference to FIG. 9. The method 200 includes the following steps.

Step 210: The to-be-located terminal obtains an identifier of the core network device. For a specific process, refer to the foregoing step 110. Details are not described herein again.

Step 220: The to-be-located terminal obtains the second information, where the second information identifies positioning of the to-be-located terminal.

Optionally, the second information may identify or indicate a location session (location session or positioning session) for the to-be-located terminal or a positioning event for the to-be-located terminal. Alternatively, the second information may identify or indicate that the measurement data is data obtained through measurement by the assistant terminal for the to-be-located terminal, or the second information may identify or indicate that the measurement data is sidelink positioning measurement data between the assistant terminal and the to-be-located terminal.

Optionally, the to-be-located terminal may generate the second information.

Optionally, the to-be-located terminal receives the second information sent by one of a plurality of assistant terminals. In this case, the second information may be generated by the assistant terminal; or the assistant terminal obtains the second information from the core network device through a first AMF network element serving the assistant terminal, where the second information is generated by the core network device. For example, the assistant terminal initiates **"(1) Mobile originated location request procedure (MO-LR procedure)".** In the procedure, the core network device generates the second information, and then sends the second information to the assistant terminal through the first AMF network element serving the assistant terminal. The assistant terminal sends the second information to the to-be-located terminal.

Optionally, the to-be-located terminal may receive, through a second AMF network element serving the to-be-located terminal, the second information sent by the core network device, where the second information is generated by the core network device. For example, the assistant terminal initiates **"(1) Mobile originated location request procedure (MO-LR procedure)".** In the procedure, the core network device generates the second information, and then sends the second information to the to-be-located terminal through the second AMF network element serving the to-be-located terminal.

Optionally, the second information may include an identifier of the location session. In this case, the second information may identify a location session for the to-be-located terminal, in other words, the second information is identification information at a session or event granularity. For example, the identifier of the location session herein may be a location session ID, a positioning session ID, a ranging session ID, or the like.

It should be understood that an execution sequence of step 210 and step 220 is not limited in this embodiment of this application. For example, the to-be-located terminal may first perform step 210 and then perform step 220, or first perform step 220 and then perform step 210, or perform step 210 and step 220 at the same time.

Step 230: The to-be-located terminal sends first information and the second information to the plurality of assistant terminals.

Optionally, the first information and the second information may be carried in a same message for sending. Alternatively, the first information and the second information are carried in different messages for sending. In this case, the first information may be sent before the second information, or the second information may be sent before the first information.

Optionally, the to-be-located terminal sends the first information and the second information to the plurality of assistant terminals in any manner, for example, unicast/multicast/broadcast.

Optionally, the first information and the second information may be same information. In this case, the first information further identifies the positioning of the to-be-located terminal, or the second information further indicates the assistant terminal to send the measurement data to the core network device.

Further, the first information may include the identifier of the core network device, and the second information includes the identifier of the location session. In this case, the identifier of the core network device (for example, an LMF ID) and the identifier of the location session (for example, a location session ID) may be unified as one identifier, for example, a routing identifier (routing identifier) or a deferred routing identifier (deferred routing identifier). In this case, the identifier may identify both the core network device and the positioning of the to-be-located terminal.

Optionally, the core network device may be an LMF, and the LMF has a plurality of different IP addresses. In this case, the different IP addresses may identify positioning of different to-be-located terminals. Therefore, the unified identifier may be an IP address of the LMF, and the IP address may not only identify the core network device but also identify the positioning of the to-be-located terminal. The IP address is a routing identifier, and a plurality of different assistant terminals may send a plurality of pieces of measurement data for the to-be-located terminal to the IP address. The core network device learns that the plurality of pieces of measurement data received by the IP address are all for the to-be-located terminal, to be specific, measurement data for a same to-be-located terminal. In this case, the plurality of pieces of measurement data may be associated.

Step 240: Each of the plurality of assistant terminals sends the measurement data and the second information to the core network device based on the first information.

Correspondingly, the core network device receives the measurement data and the second information that are sent by each of the plurality of assistant terminals.

In a possible implementation, that the assistant terminal sends the measurement data and the second information to the core network device based on the first information may include, be equivalently replaced with, or be understood as that the assistant terminal sends the measurement data, the first information, and the second information to the first AMF network element serving the assistant terminal, where the first information is used by the first AMF network element to send the measurement data to the core network device. To be specific, the first AMF network element performs route selection based on the first information, and forwards the measurement data and the second information to the core network device.

In another possible implementation, that the assistant terminal sends the measurement data and the second information to the core network device based on the first information may include, be equivalently replaced with, or be understood as that the assistant terminal sends the measurement data, the identifier of the core network device, and the second information to the first AMF network element serving the assistant terminal, where the identifier of the core network device is used by the first AMF network element to send the measurement data to the core network device. To be specific, the first AMF network element performs route selection based on the identifier of the core network device, and forwards the measurement data and the second information to the core network device.

In another possible implementation, that the assistant terminal sends the measurement data and the second information to the core network device based on the first information may include, be equivalently replaced with, or be understood as that the assistant terminal sends the measurement data and the second information to the core network device through a protocol data unit (protocol data unit, PDU) session, where a destination address to which the measurement data and the second information are sent is an IP address of the core network device. Optionally, the to-be-located terminal further sends third information to the plurality of assistant terminals, where the third information indicates that the measurement data is sent to the core network device through a user plane or the PDU session, or the third information indicates that the core network device supports user plane transmission. After receiving the third information, the assistant terminal sends the measurement data and the second information to the core network device through the PDU session.

Step 250: The core network device calculates the location of the to-be-located terminal based on the measurement data sent by the plurality of assistant terminals.

Considering that the core network device may receive measurement data for a plurality of different to-be-located terminals from a same assistant terminal, in this embodiment of this application, each assistant terminal sends the measurement data and the second information to the core network device based on the first information. In this case, the core network device can learn of, based on the second information, a specific to-be-located terminal for which the measurement data corresponding to the second information is. The second information is equivalent to a label, and the core network device associates the plurality of pieces of measurement data corresponding to the second information, in other words, the core network device associates the plurality of pieces of measurement data for the to-be-located terminal based on the second information, and uses the plurality of pieces of measurement data together to calculate the location of the to-be-located terminal. This avoids using sidelink positioning measurement data between the assistant terminal and a to-be-located terminal A to calculate a location of a to-be-located terminal B, to ensure accuracy of a positioning result.

Optionally, step 250 may be replaced with that the core network device calculates the location of the to-be-located terminal based on the measurement data associated with the second information sent by the plurality of assistant terminals.

Optionally, step 250 may be replaced with that the core network device calculates the location of the to-be-located terminal based on the measurement data sent by the plurality of assistant terminals, where the measurement data is associated with the second information.

The association herein may be understood as that the second information and the measurement data are sent by a same assistant terminal, or the second information and the measurement data are from a same assistant terminal. Therefore, the second information may be associated with the measurement data. The core network device calculates the location of the to-be-located terminal based on the plurality of pieces of measurement data associated with the second information sent by the plurality of assistant terminals. In this case, each assistant terminal sends the measurement data and the second information. Therefore, the plurality of pieces of measurement data sent by the plurality of assistant terminals are all associated with the second information, and can be used together to calculate the location of the to-be-located terminal.

Optionally, the measurement data and the second information may be carried in a same message or a same container. After receiving the message or the container, the core network device learns that the measurement data is associated with the second information.

For example, both the measurement data and the second information may be carried in a measurement report (report) message.

In a possible implementation, the first information and the second information may be same information. For example, the first information indicates the assistant terminal to send the measurement data to the core network device (or indicates that the core network device calculates the location of the to-be-located terminal, or indicates that the core network device manages the positioning of the to-be-located terminal), and further identifies the positioning of the to-be-located terminal (identify the location session for the to-be-located terminal). The first information may be the identifier of the core network device (for example, the LMF). In this case, step 220 may be skipped and does not need to be performed. In step 230, the to-be-located terminal sends the first information to the plurality of assistant terminals. Step 240 may be replaced with that each of the plurality of assistant terminals sends the measurement data and the first information to the core network device based on the first information. Alternatively, step 240 may be replaced with that each of the plurality of assistant terminals sends the measurement data and the first information to the first AMF network element serving the assistant terminal, and the first AMF network element performs route selection based on the first information, and forwards the measurement data and the first information to the core network device. Step 250 may be replaced with that the core network device calculates the location of the to-be-located terminal based on the measurement data associated with the first information sent by the plurality of assistant terminals.

The core network device may receive, at different time points, measurement data sent by different assistant terminals, and it takes a period of time for the core network device to receive the plurality of pieces of measurement data of the assistant terminal. The core network device may not be aware exactly how many pieces of measurement data need to be received. Therefore, to avoid a long wait of the core network device, and to enable the to-be-located terminal to receive location information in time, a specific trigger condition may be set for the core network device. When the trigger condition is met, the core network device stops waiting, and starts to calculate the location of the to-be-located terminal based on the received measurement data. The following discusses when the core network device performs step 250, to be specific, when the core network device starts to calculate the location of the to-be-located terminal.

Case a: The location of the to-be-located terminal starts to be calculated when the received measurement data reaches a preset threshold.

Specifically, the core network device may receive the measurement data and the second information that are sent by each of N assistant terminals, where N is an integer greater than or equal to 2, for example, N is 3, 4, or 5. When determining that N is greater than or equal to the preset threshold, that is, a received measurement report for the to-be-located terminal reaches the preset threshold, the core network device stops waiting, and calculates the location of the to-be-located terminal based on N pieces of measurement data corresponding to the N assistant terminals. Herein, the N pieces of measurement data corresponding to the N assistant terminals are N pieces of measurement data sent by the N assistant terminals, the N assistant terminals are in one-to-one correspondence with the N pieces of measurement data, and each assistant terminal sends one piece of measurement data.

Optionally, the preset threshold may be pre-specified in a system or a protocol. For example, the protocol specifies that the preset threshold may be 2, 3, 4, or more. In this case, in the foregoing step 230, the to-be-located terminal needs to send the first information and the second information to a larger quantity, relative to the preset threshold, of assistant terminals. For example, the protocol specifies that the preset threshold may be 3, and therefore, in the foregoing step 230, the to-be-located terminal needs to send the first information and the second information to three or more assistant terminals.

Optionally, the preset threshold may be indicated by a terminal side. The to-be-located terminal may indicate, to the core network device according to a positioning accuracy requirement (a higher positioning accuracy requirement indicates a need for a larger quantity of assistant terminals) through one of the assistant terminals, that the preset threshold may be, for example, 2, 3, 4, or more.

Optionally, the to-be-located terminal may send a quantity of assistant terminals to the core network device through one of the assistant terminals or the to-be-located terminal, so that the core network device sets the preset threshold to the quantity of assistant terminals. Alternatively, the to-be-located terminal may send an identifier of each assistant terminal to the core network device through one of the assistant terminals or the to-be-located terminal, so that the core network device learns of a quantity of assistant terminals. When determining that a value of N reaches the preset threshold, that is, the measurement data sent by all the assistant terminals is received, the core network device calculates the location of the to-be-located terminal based on the N pieces of measurement data. For example, the quantity of assistant terminals may be 4, and after determining that four pieces of measurement data (that is, the value of N reaches 4) are received, the core network device calculates the location of the to-be-located terminal based on the received four pieces of measurement data.

Optionally, the to-be-located terminal may indicate the quantity of assistant terminals to the core network device through one of the assistant terminals, and the core network device considers by default that the preset threshold is a quantity of assistant terminals of a specific proportion. Alternatively, the terminal side may directly indicate the quantity of assistant terminals of the specific proportion. In this case, as long as measurement data sent by the assistant terminals of the specific proportion is received, the location of the to-be-located terminal may start to be calculated. For example, the quantity of assistant terminals may be 4, and the preset proportion may be 50% (that is, the preset threshold is 2 in this case). The terminal side may indicate that the quantity of assistant terminals is 4, and the core network device determines that the preset threshold is 4*50%=2 according to a protocol specification, or the terminal side may directly indicate that the preset threshold is 2. After determining that two pieces of measurement data (that is, the value of N reaches 2) are received, the core network device may calculate the location of the to-be-located terminal based on the received two pieces of measurement data, without waiting for all the four pieces of measurement data to be received.

Through the foregoing setting, it can be ensured that a specific amount of measurement data is always used to calculate the location of the to-be-located terminal, and positioning accuracy of the to-be-located terminal can be ensured.

Case b: The location of the to-be-located terminal starts to be calculated when duration since a 1^{st} piece of measurement data is received reaches preset duration.

Specifically, the core network device may receive the measurement data and the second information that are sent by each of N assistant terminals, where N is an integer greater than or equal to 1, for example, N is 2, 3, 4, or 5. When determining that the duration since the 1^{st} piece of measurement data in the N pieces of measurement data is received reaches the preset duration, that is, the duration since the 1^{st} piece of measurement data associated with the second information is received reaches the preset duration, the core network device calculates the location of the to-be-located terminal based on the N pieces of measurement data, where measurement data in the N pieces of measurement data other than the 1^{st} piece of measurement data is received within the preset duration, in other words, N-1 pieces of measurement data are received within the preset duration since the 1^{st} piece of measurement data is received, and N-1 may be 0, 1, 2, 3, or the like. In a special case, when N-1 is 0, it indicates that the measurement data is not received within the preset duration.

Optionally, when determining that the 1^{st} piece of measurement data associated with the second information is received, the core network device starts a timer timer. After the timer expires (after the timer expires), the core network device calculates the location of the to-be-located terminal based on the received one or more pieces of measurement data associated with the second information.

Optionally, the preset duration may be pre-specified in a system or a protocol. For example, the preset duration may be 1 second (s), 2s, 5s, 10s, 30s, 60s, 90s, 120s, or the like.

Through the foregoing setting, it can be ensured that the core network device calculates the location of the to-be-located terminal in time, in other words, it can be ensured that the to-be-located terminal can receive location information in time, which can ensure timeliness, avoid a long wait, and therefore improve use experience of the terminal.

Step 260: The core network device sends the location information to the to-be-located terminal. For a specific process, refer to the foregoing step 150. Details are not described herein again.

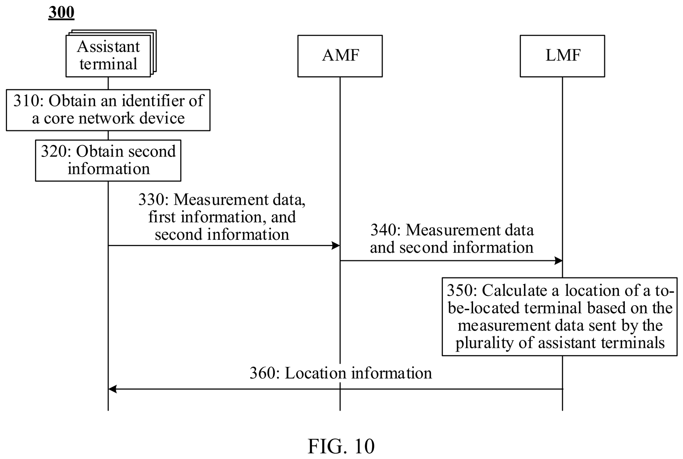

FIG. 10 is a schematic flowchart of a communication method 300 according to this application. Compared with the method 100 shown in FIG. 8 and the method 200 shown in FIG. 9, the method 300 according to an embodiment of this application is mainly intended to describe a case in which an assistant terminal may obtain an identifier of a core network device (or first information) and second information without the aid of a to-be-located terminal, and the assistant terminal may send measurement data and the second information to an LMF (in this case, the core network device is the LMF) through an AMF serving the assistant terminal.

The following describes the communication method 300 provided in an embodiment of this application with reference to FIG. 10. The method 300 includes the following steps.

Step 310: The assistant terminal obtains the identifier of the core network device.

Optionally, the assistant terminal receives the identifier of the core network device sent by the to-be-located terminal.

Optionally, the assistant terminal receives the identifier of the core network device sent by a first AMF network element serving the assistant terminal.

In this embodiment of this application, the first information may include the identifier of the core network device, and obtaining the identifier of the core network device may be equivalently replaced with or understood as obtaining the first information. Therefore, the assistant terminal may receive the first information sent by the to-be-located terminal, or the assistant terminal receives the first information sent by the first AMF network element serving the assistant terminal, to obtain the identifier of the core network device.

Step 320: The assistant terminal obtains the second information.

Optionally, the assistant terminal may generate the second information. In this case, the assistant terminal needs to send the second information to another assistant terminal through the to-be-located terminal or a network device.

Optionally, the assistant terminal receives, through the first AMF network element serving the assistant terminal, the second information sent by the core network device. In this case, the second information may be generated by the core network device.

Optionally, the assistant terminal may receive the second information sent by the to-be-located terminal. In this case, the second information may be generated by the to-be-located terminal, the another assistant terminal, or the core network device.

Step 330: The assistant terminal sends the measurement data, the first information, and the second information to the AMF (that is, the foregoing first AMF) serving the assistant terminal. The measurement data, the first information, and the second information may be carried in a measurement report message at the same time.

Correspondingly, the AMF receives the measurement data, the first information, and the second information that are sent by the assistant terminal.

Step 340: The AMF sends the measurement data and the second information to the LMF (that is, the foregoing core network device).

Correspondingly, the LMF receives the measurement data and the second information from the AMF.

Specifically, the AMF may read the first information, where the first information may include an identifier of the LMF, and forward the measurement data and the second information to the LMF based on an indication of the first information.

Step 350: The LMF calculates a location of the to-be-located terminal based on the measurement data sent by a plurality of assistant terminals.

Step 360: The LMF sends location information to the assistant terminal, and the assistant terminal forwards the location information to the to-be-located terminal.

Correspondingly, the assistant terminal receives the location information sent by the LMF, and forwards the location information to the to-be-located terminal through a sidelink.

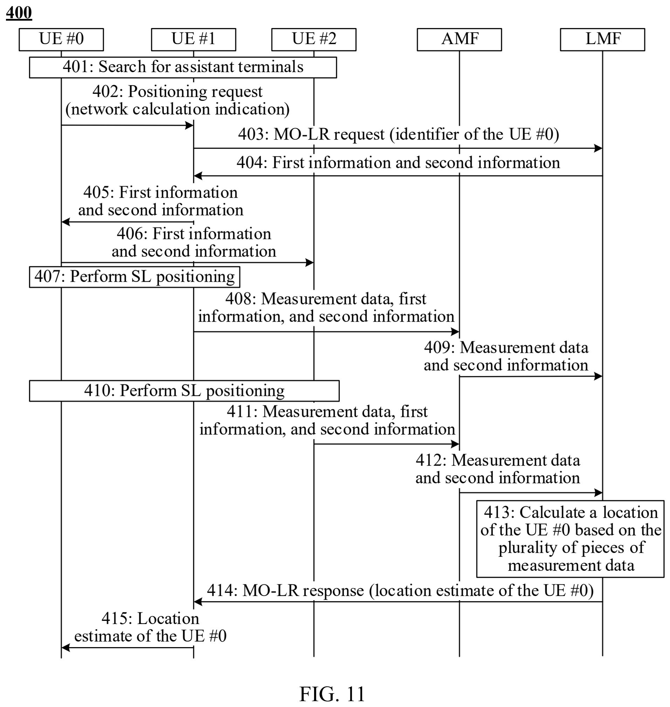

FIG. 11 is a schematic flowchart of a communication method 400 according to this application. Compared with the method 100 shown in FIG. 8, the method 200 shown in FIG. 9, and the method 300 shown in FIG. 10, the method 400 according to an embodiment of this application is used as a more specific example to describe the solution provided in this application. The method 400 may be considered as a specific implementation of the foregoing method.

In FIG. 11, a UE #0 corresponds to the to-be-located terminal in the foregoing embodiments, a UE #1 and a UE #2 correspond to the assistant terminal in the foregoing embodiments, and an LMF corresponds to the core network device in the foregoing embodiments. In this embodiment, different assistant terminals exchange first information, where the first information includes an LMF ID. The LMF allocates second information, where the second information includes, for example, an identifier of a location session positioning session ID associated with the UE #0. The following describes the communication method 400 provided in an embodiment of this application with reference to FIG. 11. The method 400 includes the following steps.

Step 401: The UE #0 searches for other surrounding UEs, and finds that the UE #1 and the UE #2 may be used as assistant terminals that assist in positioning of the UE #0.

Step 402: The UE #0 sends a positioning request (ranging request) message to the UE #1, where the message carries a network calculation indication (network calculation indication), to indicate that a network side calculates a location of the UE #0.

Optionally, the network calculation indication may be replaced with a network-based positioning method (network-based positioning method), which means a network needs to participate in calculation of a positioning result. In other words, when the UE #0 indicates the network-based positioning method to the UE #1, the UE #1 understands that the network side calculates the location of the UE #0.

Optionally, when the UE #0 has no positioning calculation capability and the UE #0 does not find a location server terminal (location server UE), or when the UE #0 has no positioning calculation capability and the UE #1 and the UE #2 have no calculation capability either, the UE #0 determines that the LMF needs to participate in positioning calculation, in other words, sends the network calculation indication.

Optionally, the UE #0 may determine, based on information about the UE #1 (for example, intention information of the UE #1 that is obtained from a discovery message in step 401 and that indicates that the UE #1 is willing to help the UE #0 request the positioning calculation from a network), to send the positioning request message to the UE #1 instead of sending the request to the UE #2.

Step 403: The UE #1 receives the positioning request message, and determines that the message carries the network calculation indication. In this case, the UE #1 sends an MO-LR request message to the network side (for example, an AMF), where the message may include an identifier of the UE #0, to request to perform the positioning calculation on the UE #0, where the positioning calculation may be performed based on sidelink positioning measurement data.

Herein, the network computation indication may be considered as a trigger condition. After determining to receive the network computation indication, the UE #1 may automatically send the MO-LR request message to the network side (for example, the AMF).

Optionally, the MO-LR request message may further include a sidelink positioning calculation indication. The AMF may select, based on the sidelink positioning calculation indication, an LMF that can support the function, and then the AMF requests the LMF to calculate or manage the positioning result of the UE #0. The sidelink positioning calculation indication may also be replaced with a sidelink positioning calculation request.

After receiving the MO-LR request message, the AMF sends a determine location request (Determine Location Request) to the LMF, where the determine location request includes the identifier of the UE #0. Optionally, the determine location request further includes the sidelink positioning calculation indication.

Step 404: The LMF allocates the second information for the positioning of the UE #0. For example, the LMF may allocate the second information based on the identifier of the UE #0, and establish an association relationship between the second information and the UE #0. The second information identifies the positioning of the UE #0. For example, the second information includes the identifier of the location session positioning session ID. The LMF sends the first information and the second information to the UE #1 through the AMF. Herein, the first information includes the LMF ID, for example, includes an IP address of the LMF or an FQDN of the LMF.

Optionally, the first information and the second information may be same information. The LMF ID and the positioning session ID may be unified as an identifier, for example, a routing identifier (routing identifier). In this case, the identifier may identify both the LMF and the positioning of the UE #0 (for example, the LMF may have a plurality of different IP addresses, and the LMF uses different IP addresses to represent positioning events of different to-be-located terminals).

Step 405: The UE #1 sends the first information and the second information to the UE #0.

It should be noted that the foregoing step 402 to step 405 are mainly performed for the UE #0 that is not in an on-network state (that is, the UE #0 is in an off-network state), in other words, cannot be directly connected to the network.

If the UE #0 can be connected to the network, the UE #0 may initiate an MO-LR request (in other words, the foregoing step 402 to step 405 are not needed), and receive the first information and the second information from the LMF. In this case, the MO-LR request may further carry identifiers of a plurality of assistant terminals (for example, located UE IDs). The identifier of the assistant terminal may be an identifier of each assistant terminal obtained in a discovery procedure in step 401, or may be an identifier of an application layer or an identifier configured by the network for ranging, for example, user information (user info) sent by a PCF to the UE. After receiving the identifiers of the plurality of assistant terminals, the LMF understands that these terminals are used to assist in the positioning of the UE #0, and allocates the second information, that is, allocates the positioning session ID.

Optionally, the MO-LR request may include a terminal-assisted positioning indication, and the LMF allocates the second information or the positioning session ID based on the indication.

Step 406: The UE #0 sends the first information and the second information to the UE #2.

In another implementation of step 405 and step 406, the UE #0 sends an identifier of the UE #2 to the UE #1. In this way, the UE #1 may directly send the first information and the second information to the UE #2, without relay forwarding by the UE #0.

Step 407: A ranging operation (ranging operation) is performed between the UE #0 and the UE #1, that is, a sidelink SL positioning procedure is performed, to obtain the sidelink positioning measurement data. For a specific process, refer to content in **"(3) SL positioning procedure".**

Step 408: The UE #1 sends the measurement data, the first information, and the second information to the AMF, where the AMF herein is a network element that provides access/mobility management for the UE #1, and is an AMF network element serving the UE #1.

Step 409: The AMF determines the LMF based on the first information, and sends the measurement data and the second information to the LMF.

Step 410: Sidelink SL positioning is performed between the UE #0 and the UE #2, to obtain the sidelink positioning measurement data.

Step 411: The UE #2 sends the measurement data, the first information, and the second information to the AMF, where the AMF herein is a network element that provides access/mobility management for the UE #2, and is an AMF network element serving the UE #2. Herein, a same AMF may serve the UE #1 and the UE #2. In another implementation, two different AMFs may serve the UE #1 and the UE #2 respectively. This is not limited in this application.

Step 412: The AMF determines the LMF based on the first information, and sends the measurement data and the second information to the LMF.

Step 413: The LMF calculates the location of the UE #0 based on the plurality of pieces of measurement data associated with the second information.

Step 414: The LMF sends an MO-LR response message to the UE #1 through the AMF, where the message carries location information of the UE #0.

Step 415: The UE #1 sends the location information to the UE #0. For example, the location information may be sent through a sidelink between two UEs.

In addition, with regard to when the LMF performs step 413, there may be two manners: Manner 1: A timer is started when a 1^{st} piece of measurement data associated with the second information is received, and after the timer expires, step 413 is performed based on all the received measurement data associated with the second information. Manner 2: Starting from step 403, in which a quantity of assistant terminals participating in the positioning of the UE #0 or a quantity of required assistant terminals corresponding to positioning accuracy of the UE #0 (higher accuracy indicates a larger quantity) is received, when an amount of received measurement data associated with the second information is the same as or reaches a specific proportion to the quantity of assistant terminals, step 413 is performed. Manner 3: The foregoing two manners are used in combination, and step 413 is performed when either of the two manners is met.

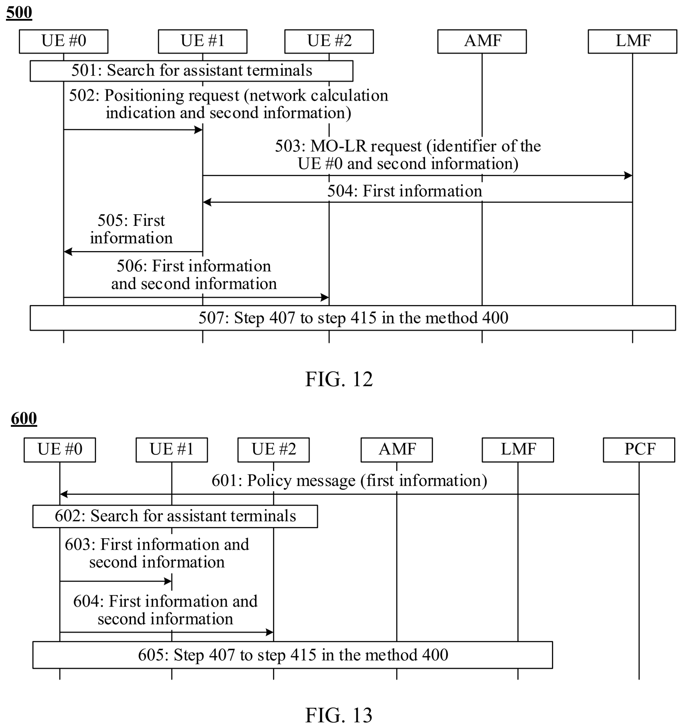

FIG. 12 is a schematic flowchart of a communication method 500 according to this application. Compared with the method 400 shown in FIG. 11, in the method 500 according to an embodiment of this application, first information is exchanged between different assistant terminals, where the first information includes an LMF ID; and second information is allocated by a UE #0 or a UE #1, where the second information includes, for example, an identifier of a location session positioning session ID associated with the UE #0. The following describes the communication method 500 provided in this embodiment of this application (mainly describes a difference from the method 400) with reference to FIG. 12. The method 500 includes the following steps.

Step 501: The UE #0 searches for other surrounding UEs, and finds that the UE #1 and a UE #2 may be used as assistant terminals that assist in positioning of the UE #0.

Step 502: The UE #0 allocates the second information for the positioning, where the second information identifies the positioning of the UE #0. For example, the second information includes the identifier of the location session positioning session ID. The UE #0 sends a positioning request message to the UE #1, where the message carries a network calculation indication and the second information.

Step 503: The UE #1 receives the positioning request message, and determines that the message carries the network calculation indication. In this case, the UE #1 sends an MO-LR request message to a network side AMF, where the message may include an identifier of the UE #0 and the second information.

Optionally, if the second information is not received in step 502, the UE #1 allocates the second information for the positioning of the UE #0, that is, allocates the identifier of the location session positioning session ID.

After receiving the MO-LR request message, the AMF sends a determine location request (Determine Location Request) to an LMF, where the determine location request includes the identifier of the UE #0 and the second information.

Step 504: The LMF sends the first information to the UE #1 through the AMF, where the first information includes the LMF ID, and does not need to send the second information.

Step 505: The UE #1 sends the first information to the UE #0. In addition, if the second information is allocated by the UE #1, the UE #1 sends the first information and the second information to the UE #0.

Step 506: The UE #0 sends the first information and the second information to the UE #2.

Step 507 is the same as step 407 to step 415 in the foregoing method 400. For specific content, refer to the foregoing descriptions. Details are not described herein again.

FIG. 13 is a schematic flowchart of a communication method 600 according to this application. Compared with the method 400 shown in FIG. 11, in the method 600 according to an embodiment of this application, a UE #0 pre-configures first information, where the first information includes an LMF ID; and the UE #0 allocates second information, where the second information includes, for example, an identifier of a location session positioning session ID associated with the UE #0. The following describes the communication method 600 provided in this embodiment of this application (mainly describes a difference from the method 400) with reference to FIG. 13. The method 600 includes the following steps.

Step 601: The UE #0 pre-configures the first information, where the first information includes the LMF ID, or includes the first information in policy information received from a PCF in a registration procedure. The LMF ID may be, for example, an IP address or an FQDN of an LMF. Optionally, LMF IDs are distinguished based on locations, and different geographical locations correspond to different LMFs.

Step 602: The UE #0 searches for other surrounding UEs, and finds that a UE #1 and a UE #2 may be used as assistant terminals that assist in positioning of the UE #0.

Step 603: The UE #0 allocates the second information for the positioning, where the second information identifies the positioning of the UE #0. For example, the second information includes the identifier of the location session positioning session ID. The UE #0 sends the first information and the second information to the UE #1.

Step 604: The UE #0 sends the first information and the second information to the UE #2.

Step 605 is the same as step 407 to step 415 in the foregoing method 400. For specific content, refer to the foregoing descriptions. Details are not described herein again.

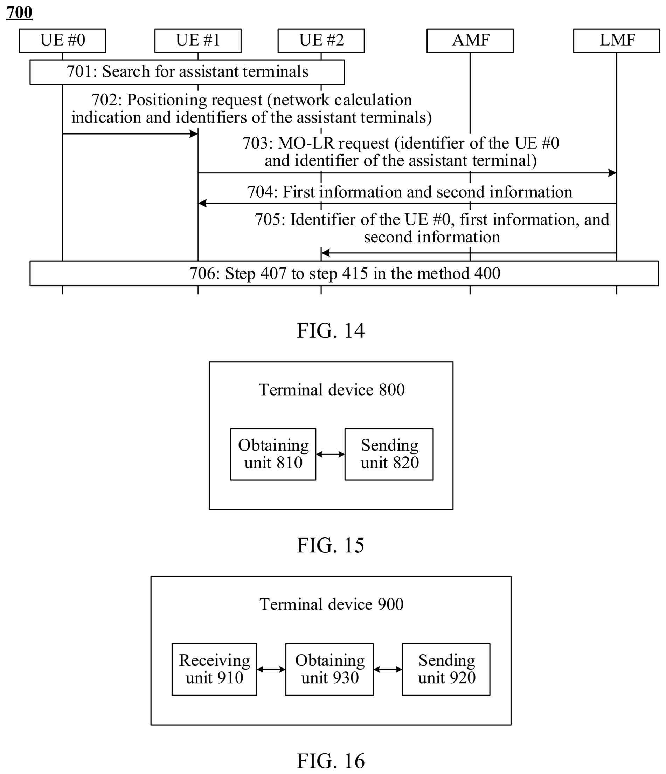

FIG. 14 is a schematic flowchart of a communication method 700 according to this application. Compared with the method 400 shown in FIG. 11, in the method 700 according to an embodiment of this application, an LMF triggers an assistant terminal to perform location measurement on a to-be-located terminal; and the LMF allocates second information, where the second information includes, for example, an identifier of a location session positioning session ID associated with a UE #0. The following describes the communication method 700 provided in this embodiment of this application (mainly describes a difference from the method 400) with reference to FIG. 14. The method 700 includes the following steps.

Step 701: The UE #0 searches for other surrounding UEs, and finds that a UE #1 and a UE #2 may be used as assistant terminals that assist in positioning of the UE #0.

Step 702: The UE #0 sends a positioning request message to the UE #1, where the message carries a network calculation indication, to indicate that a network side calculates a location of the UE #0.

In addition, the positioning request message may further carry identifiers of a plurality of assistant terminals (for example, located UE IDs). The identifier of assistant terminal may be an identifier of each assistant terminal obtained in a discovery procedure in step 701, or may be an identifier of an application layer or an identifier configured by a network for ranging, for example, user information (user info) sent by a PCF to the UE.

Step 703: The UE #1 sends an MO-LR request message to a network side AMF, where the message may include an identifier of the UE #0, to request to perform positioning calculation on the UE #0, where the positioning calculation may be performed based on sidelink positioning measurement data. The MO-LR request message further includes the identifiers of the plurality of assistant terminals.

After receiving the MO-LR request message, the AMF sends a determine location request (Determine Location Request) to the LMF, where the determine location request includes the identifiers of the plurality of assistant terminals. After receiving the identifiers of the plurality of assistant terminals, the LMF understands that these terminals are used to assist in the positioning of the UE #0, and allocates the second information, that is, allocates the positioning session ID.

Step 704: The LMF sends first information and the second information to the UE #1 through an AMF serving the UE #1, where the first information includes an LMF ID.

Step 705: The LMF sends a ranging (ranging) request message to an assistant terminal (for example, the UE #2) other than the UE #1, where the message carries the identifier of the UE #0, the first information, and the second information, to request to perform positioning measurement on the UE #0.

Optionally, the LMF may first determine an AMF serving the UE #2 (for example, obtain an identifier of the AMF from a UDM), and send the measurement request message to the UE #2 through the AMF.

Optionally, the LMF converts the identifiers of the plurality of assistant terminals Located UE IDs (if the identifier is the identifier of the application layer/user info) into identifiers (for example, SUPIs) of the terminals in the network through another network element (for example, the PCF). For example, the PCF learns of a correspondence between the user info and the SUPI, and then sends the measurement request message to each assistant terminal based on the converted identifiers. In this case, the LMF may deliver the first information and the second information to each assistant terminal, and the first information and the second information do not need to be exchanged between different assistant terminals.

Step 706 is the same as step 407 to step 415 in the foregoing method 400. For specific content, refer to the foregoing descriptions. Details are not described herein again.

Optionally, with reference to a case in which the UE #0 allocates the second information, that is, allocates the identifier of the location session positioning session ID, the second information is included in step 702 and step 703. In this case, the LMF does not need to allocate the second information.

The foregoing describes in detail the communication methods in embodiments of this application with reference to FIG. 1 to FIG. 14. The following describes in detail apparatuses in embodiments of this application with reference to FIG. 15 to FIG. 19. It should be understood that the apparatuses shown in FIG. 15 to FIG. 19 can implement one or more steps in the method procedures shown in FIG. 8 to FIG. 14. To avoid repetition, details are not described herein again.

FIG. 15 is a schematic block diagram of a terminal device 800 according to an embodiment of this application. The terminal device 800 may be the to-be-located terminal in the foregoing embodiments. As shown in FIG. 15, the terminal device 800 includes an obtaining unit 810 and a sending unit 820.

The obtaining unit 810 is configured to obtain an identifier of a core network device.

The sending unit 820 is configured to send first information to a plurality of assistant terminals, where the first information indicates the assistant terminal to send measurement data to the core network device, the measurement data includes sidelink positioning measurement data between the assistant terminal and the terminal device 800, and the measurement data sent by the plurality of assistant terminals is used by the core network device to calculate a location of the terminal device 800.

Optionally, the obtaining unit 810 is further configured to obtain second information, where the second information identifies positioning of the terminal device 800; and the sending unit 820 is further configured to send the second information to the plurality of assistant terminals.

Optionally, the second information includes an identifier of a location session.

Optionally, the first information further identifies the positioning of the terminal device 800.

Optionally, the first information includes the identifier of the core network device.

Optionally, the obtaining unit 810 is specifically configured to: receive the identifier of the core network device sent by a policy control function PCF network element; receive, through one of the assistant terminals, the identifier of the core network device sent by a first access and mobility management function AMF network element serving the assistant terminal; or receive the identifier of the core network device sent by a second AMF network element serving the terminal device 800.

Optionally, the obtaining unit 810 is specifically configured to: generate the second information; receive the second information sent by one of the plurality of assistant terminals; or receive, through a second AMF network element serving the terminal device 800, the second information sent by the core network device.

FIG. 16 is a schematic block diagram of a terminal device 900 according to an embodiment of this application. The terminal device 900 may be the assistant terminal in the foregoing embodiments. As shown in FIG. 16, the terminal device 900 includes a receiving unit 910, a sending unit 920, and an obtaining unit 930.

The receiving unit 910 is configured to receive first information, where the first information indicates the terminal device 900 to send measurement data to a core network device, and the measurement data includes sidelink positioning measurement data between the terminal device 900 and a to-be-located terminal.

The sending unit 920 is configured to send the measurement data to the core network device based on the first information, where the measurement data sent by the terminal device 900 is used by the core network device to calculate a location of the to-be-located terminal.

Optionally, the obtaining unit 930 is configured to obtain second information, where the second information identifies positioning of the to-be-located terminal.

The sending unit 920 is further configured to send the second information to the core network device.

Optionally, the second information includes an identifier of a location session or an identifier of the to-be-located terminal.

Optionally, the first information further identifies the positioning of the to-be-located terminal.

Optionally, the first information includes an identifier of the core network device.

Optionally, the receiving unit 910 is specifically configured to: receive the first information sent by the to-be-located terminal; or receive the first information sent by a first access and mobility management function AMF network element serving the terminal device 900.

Optionally, the obtaining unit 930 is specifically configured to: generate the second information; or receive, through a first AMF network element serving the terminal device 900, the second information sent by the core network device; or receive the second information sent by the to-be-located terminal.

Optionally, the sending unit 920 is specifically configured to send the first information and the measurement data to a first AMF network element serving the terminal device 900, where the first information is used by the first AMF network element to send the measurement data to the core network device.

In a possible implementation, the terminal device 800 may be a terminal device 1000 in the following figure, where a function of the sending unit 820 may be implemented through a transceiver 1001 (that is, a control circuit and an antenna) of the terminal device 1000, and a function of the obtaining unit 810 may be implemented through a processor 1002 and/or the transceiver 1001 of the terminal device 1000.

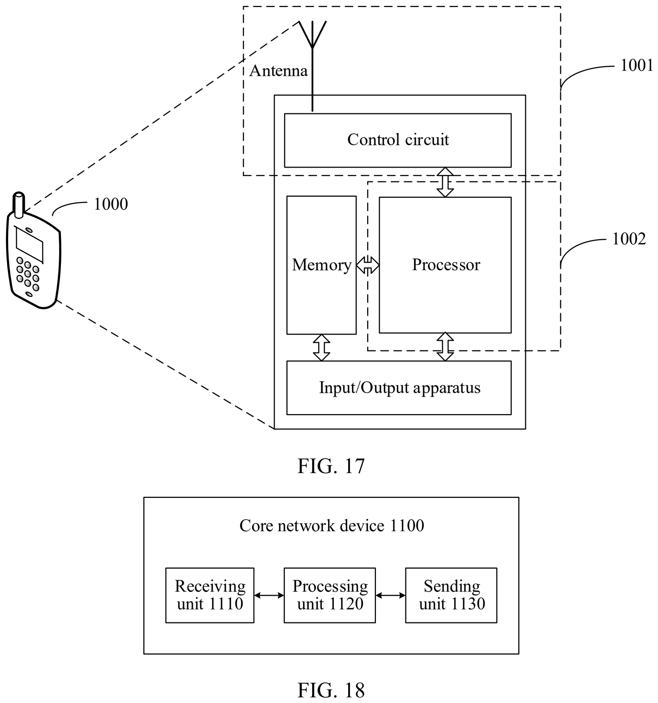

In a possible implementation, the terminal device 900 may be the terminal device 1000 in the following figure, where functions of the receiving unit 910 and the sending unit 920 may be implemented through the transceiver 1001 (that is, the control circuit and the antenna) of the terminal device 1000, and a function of the obtaining unit 930 may be implemented through the processor 1002 and/or the transceiver 1001 of the terminal device 1000. The following describes a structure of the terminal device 1000 in an embodiment of this application with reference to FIG. 17.

FIG. 17 is a diagram of a structure of a terminal device 1000 according to an embodiment of this application. The terminal device 1000 may be applied to the system shown in FIG. 1 or FIG. 2, and performs a function of the terminal device (UE) in the foregoing method embodiments, for example, may perform a function of the to-be-located terminal, or perform a function of the assistant terminal. For ease of description, FIG. 17 shows only main components of the terminal device. As shown in FIG. 17, the terminal device 1000 includes a processor 1002, a memory, a control circuit, an antenna, and an input/output apparatus. The processor 1002 is mainly configured to process a communication protocol and communication data, control the entire terminal device, execute a software program, and process data of the software program, for example, configured to support the terminal device in performing actions described in the foregoing method embodiments. The memory is mainly configured to store the software program and data. The control circuit is mainly configured to convert a baseband signal and a radio frequency signal and process the radio frequency signal. The control circuit and the antenna together may also be referred to as a transceiver 1001, and are mainly configured to receive and send a radio frequency signal in a form of an electromagnetic wave. The input/output apparatus, for example, a touchscreen, a display, or a keyboard, is mainly configured to: receive data input by a user and output data to the user.

After the terminal device is powered on, the processor 1002 may read the software program in a storage unit, interpret and execute instructions of the software program, and process data of the software program. When data needs to be sent in a wireless manner, the processor 1002 performs baseband processing on the to-be-sent data, and then outputs a baseband signal to a radio frequency circuit. The radio frequency circuit performs radio frequency processing on the baseband signal, and then sends a radio frequency signal through the antenna in a form of an electromagnetic wave. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 17 shows only one memory and one processor. In an actual terminal device, there may be a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 17 may integrate functions of the baseband processor and the central processing unit. A person skilled in the art may understand that the baseband processor and the central processing unit each may be an independent processor, and are interconnected through a technology like a bus. A person skilled in the art may understand that the terminal device may include a plurality of baseband processors to adapt to different network standards, the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

FIG. 18 is a schematic block diagram of a core network device 1100 according to an embodiment of this application. The core network device 1100 is configured to perform the steps performed by the core network device in the foregoing method embodiments. For example, the core network device 1100 may be an LMF. The core network device 1100 shown in FIG. 18 includes a receiving unit 1110, a processing unit 1120, and a sending unit 1130.

The receiving unit 1110 is configured to receive measurement data and second information that are sent by each of N assistant terminals, where the measurement data includes sidelink positioning measurement data between the assistant terminal and a to-be-located terminal, the second information identifies positioning of the to-be-located terminal, and N is an integer greater than or equal to 2.

The processing unit 1120 is configured to calculate a location of the to-be-located terminal based on N pieces of measurement data corresponding to the N assistant terminals.

Optionally, the processing unit 1120 is specifically configured to: when determining that N is greater than or equal to a preset threshold, calculate the location of the to-be-located terminal based on the N pieces of measurement data.

Optionally, the processing unit 1120 is specifically configured to: when determining that duration since a 1^{st} piece of measurement data in the N pieces of measurement data is received reaches preset duration, calculate the location of the to-be-located terminal based on the N pieces of measurement data, where measurement data in the N pieces of measurement data other than the 1^{st} piece of measurement data is received within the preset duration.

Optionally, the sending unit 1130 is configured to send the second information to at least one of the assistant terminals or the to-be-located terminal; or the receiving unit 1110 is configured to receive the second information sent by the assistant terminal or the to-be-located terminal.

Optionally, the sending unit 1130 is configured to send first information to at least one of the assistant terminals or the to-be-located terminal, where the first information indicates the assistant terminal to send the measurement data to the core network device 1100.

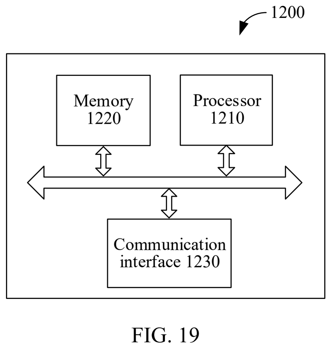

FIG. 19 is a diagram of a structure of a core network device 1200 according to an embodiment of this application. As shown in FIG. 19, the core network device 1200 includes a processor 1210, a memory 1220, and a communication interface 1230. The memory 1220 stores instructions, and the processor 1210 is configured to execute the instructions in the memory 1220. When the instructions are executed, the processor 1210 is configured to perform the method provided in any one of the foregoing method embodiments. The processor 1210 is further configured to control the communication interface 1230 to communicate with the outside world.

Further, the processor 1210, the memory 1220, and the communication interface 1230 may communicate with each other through an internal connection path, to perform transmission of a control signal and/or a data signal.

Further, the memory 1220 may be integrated into the processor 1210, or may be disposed separately from the processor 1210.

Specifically, the core network device 1200 may be configured to perform the steps performed by the core network device in the communication methods in FIG. 8 to FIG. 14. The core network device 1200 may include units in FIG. 18 that are configured to perform the foregoing communication methods. In addition, the modules in the core network device 1200 and the foregoing other operations and/or functions are respectively intended to implement corresponding procedures of the communication methods in FIG. 8 to FIG. 14. A specific process of performing the foregoing corresponding steps by the modules has been described in detail in the methods. For brevity, details are not described herein again.

It should be understood that, the processor in embodiments of this application may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and serves as an external cache. By way of example and not limitation, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

According to the method provided in embodiments of this application, this application further provides a computer program product. The computer program product includes computer program code. When the computer program code is run on a computer, the computer is enabled to perform the method according to any one of the embodiments shown in FIG. 8 to FIG. 14.

According to the method provided in embodiments of this application, this application further provides a computer-readable medium. The computer-readable medium stores program code. When the program code is run on a computer, the computer is enabled to perform the method according to any one of the embodiments shown in FIG. 8 to FIG. 14.

According to the method provided in embodiments of this application, this application further provides a chip system, including, a processor, configured to invoke a computer program from a memory and run the computer program, so that a communication device is which the chip system is installed performs the method according to any one of the embodiments shown in FIG. 8 to FIG. 14.

According to the method provided in embodiments of this application, this application further provides a system. The system includes the foregoing one or more terminal devices and the foregoing one or more core network devices.

The foregoing embodiments may be wholly or partially implemented by using software, hardware, firmware, or any combination thereof. When implemented by using the software, the foregoing embodiments may be wholly or partially implemented in a form of a computer program product. The computer program product includes one or more computer instructions or computer programs. When the computer instructions or the computer programs are loaded or executed on a computer, the procedures or functions according to embodiments of this application are wholly or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

For ease of understanding, the following describes terms used in a process of describing the solutions in this application.

In embodiments of this application, the "indication" may include a direct indication and an indirect indication, or may include an explicit indication and an implicit indication. Information indicated by specific information (for example, the "indication information" described above) is referred to as to-be-indicated information. In a specific implementation process, the to-be-indicated information is indicated in a plurality of manners, for example, but not limited to, directly indicating the to-be-indicated information, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

In embodiments of this application, "first", "second", and various numbers are merely used for differentiation for ease of description, and are not used to limit the scope of embodiments of this application. For example, the terms are used to differentiate between different indication information.

In embodiments of this application, the "communication protocol" may be a standard protocol in the communication field, for example, may include the LTE protocol, the NR protocol, and a related protocol applied to a future communication system. This is not limited in this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a to-be-located terminal, an identifier of a core network device; and
sending, by the to-be-located terminal, first information to a plurality of assistant terminals, wherein the first information indicates the assistant terminals to send measurement data to the core network device, the measurement data comprises sidelink positioning measurement data between the assistant terminals and the to-be-located terminal, and the measurement data sent by the plurality of assistant terminals is used by the core network device to calculate a location of the to-be-located terminal.

2. The method according to claim 1, wherein the method further comprises:
obtaining, by the to-be-located terminal, second information, wherein the second information identifies positioning of the to-be-located terminal; and
sending, by the to-be-located terminal, the second information to the plurality of assistant terminals.

3. The method according to claim 2, wherein the second information comprises an identifier of a location session.

4. The method according to claim 1, wherein the first information further identifies positioning of the to-be-located terminal.

5. The method according to any one of claims 1 to 4, wherein the first information comprises the identifier of the core network device.

6. The method according to any one of claims 1 to 5, wherein the obtaining, by a to-be-located terminal, an identifier of a core network device comprises:
receiving, by the to-be-located terminal, the identifier of the core network device sent by a policy control function PCF network element;
receiving, by the to-be-located terminal through one of the assistant terminals, the identifier of the core network device sent by a first access and mobility management function AMF network element serving the assistant terminal; or
receiving, by the to-be-located terminal, the identifier of the core network device sent by a second AMF network element serving the to-be-located terminal.

7. The method according to claim 2 or 3, wherein the obtaining, by the to-be-located terminal, second information comprises:
generating, by the to-be-located terminal, the second information;
receiving, by the to-be-located terminal, the second information sent by one of the plurality of assistant terminals; or
receiving, by the to-be-located terminal through a second AMF network element serving the to-be-located terminal, the second information sent by the core network device.

8. A communication method, comprising:
receiving, by a core network device, measurement data and second information that are sent by each of N assistant terminals, wherein the measurement data comprises sidelink positioning measurement data between the assistant terminal and a to-be-located terminal, the second information identifies positioning of the to-be-located terminal, and N is an integer greater than or equal to 2; and
calculating, by the core network device, a location of the to-be-located terminal based on N pieces of measurement data corresponding to the N assistant terminals.

9. The method according to claim 8, wherein the calculating, by the core network device, a location of the to-be-located terminal based on N pieces of measurement data corresponding to the N assistant terminals comprises:
when determining that N is greater than or equal to a preset threshold, calculating, by the core network device, the location of the to-be-located terminal based on the N pieces of measurement data.

10. The method according to claim 8, wherein the calculating, by the core network device, a location of the to-be-located terminal based on N pieces of measurement data corresponding to the N assistant terminals comprises:
when determining that duration since a 1^{st} piece of measurement data in the N pieces of measurement data is received reaches preset duration, calculating, by the core network device, the location of the to-be-located terminal based on the N pieces of measurement data, wherein measurement data in the N pieces of measurement data other than the 1^{st} piece of measurement data is received within the preset duration.

11. The method according to any one of claims 8 to 10, wherein before the receiving, by a core network device, measurement data and second information that are sent by each of N assistant terminals, the method further comprises:
sending, by the core network device, the second information to at least one of the assistant terminals or the to-be-located terminal; or
receiving, by the core network device, the second information sent by the assistant terminal or the to-be-located terminal.

12. The method according to any one of claims 8 to 11, wherein before the receiving, by a core network device, measurement data and second information that are sent by each of N assistant terminals, the method further comprises:
sending, by the core network device, first information to at least one of the assistant terminals or the to-be-located terminal, wherein the first information indicates the assistant terminal to send the measurement data to the core network device.

13. A terminal device, comprising:
an obtaining unit, configured to obtain an identifier of a core network device; and
a sending unit, configured to send first information to a plurality of assistant terminals, wherein the first information indicates the assistant terminals to send measurement data to the core network device, the measurement data comprises sidelink positioning measurement data between the assistant terminals and the terminal device, and the measurement data sent by the plurality of assistant terminals is used by the core network device to calculate a location of the terminal device.

14. The terminal device according to claim 13, wherein the obtaining unit is further configured to obtain second information, wherein the second information identifies positioning of the terminal device; and
the sending unit is further configured to send the second information to the plurality of assistant terminals.

15. The terminal device according to claim 14, wherein the second information comprises an identifier of a location session.

16. The terminal device according to claim 13, wherein the first information further identifies positioning of the terminal device.

17. The terminal device according to any one of claims 13 to 16, wherein the first information comprises the identifier of the core network device.

18. The terminal device according to any one of claims 13 to 17, wherein the obtaining unit is specifically configured to:
receive the identifier of the core network device sent by a policy control function PCF network element;
receive, through one of the assistant terminals, the identifier of the core network device sent by a first access and mobility management function AMF network element serving the assistant terminal; or
receive the identifier of the core network device sent by a second AMF network element serving the terminal device.

19. The terminal device according to claim 14 or 15, wherein the obtaining unit is specifically configured to:
generate the second information;
receive the second information sent by one of the plurality of assistant terminals; or
receive, through a second AMF network element serving the terminal device, the second information sent by the core network device.

20. A core network device, comprising:
a receiving unit, configured to receive measurement data and second information that are sent by each of N assistant terminals, wherein the measurement data comprises sidelink positioning measurement data between the assistant terminal and a to-be-located terminal, the second information identifies positioning of the to-be-located terminal, and N is an integer greater than or equal to 2; and
a processing unit, configured to calculate a location of the to-be-located terminal based on N pieces of measurement data corresponding to the N assistant terminals.

21. The core network device according to claim 20, wherein the processing unit is specifically configured to:
when determining that N is greater than or equal to a preset threshold, calculate the location of the to-be-located terminal based on the N pieces of measurement data.

22. The core network device according to claim 20, wherein the processing unit is specifically configured to:
when determining that duration since a 1^{st} piece of measurement data in the N pieces of measurement data is received reaches preset duration, calculate the location of the to-be-located terminal based on the N pieces of measurement data, wherein measurement data in the N pieces of measurement data other than the 1^{st} piece of measurement data is received within the preset duration.

23. The core network device according to any one of claims 20 to 22, wherein the core network device further comprises a sending unit, wherein the sending unit is configured to send the second information to at least one of the assistant terminals or the to-be-located terminal; or the receiving unit is further configured to receive the second information sent by the assistant terminal or the to-be-located terminal.

24. The core network device according to any one of claims 20 to 22, wherein the core network device further comprises a sending unit, wherein the sending unit is configured to send first information to at least one of the assistant terminals or the to-be-located terminal, wherein the first information indicates the assistant terminal to send the measurement data to the core network device.

25. A communication apparatus, comprising at least one processor, wherein the at least one processor is configured to be coupled to a memory, and read and execute instructions in the memory, to implement the method according to any one of claims 1 to 12.

26. A computer-readable storage medium, wherein the computer-readable storage medium stores a computer program; and when the computer program is run on a computer, the computer is enabled to perform the method according to any one of claims 1 to 12.

27. A chip system, comprising a processor, configured to invoke a computer program from a memory and run the computer program, to enable a communication device in which the chip system is installed to perform the method according to any one of claims 1 to 12.
